# EUROPEAN PATENT SPECIFICATION

(11) **EP 1 538 865 B1**
(45) Date of publication and mention of the grant of the patent: **30.06.2010**
(21) Application number: 03791441.3
(22) Date of filing: 01.09.2003
(51) Int. Cl.: H04R 1/00, G10L 15/28

(54) **MICROPHONE AND COMMUNICATION INTERFACE SYSTEM**
MIKROFON UND KOMMUNIKATIONSSCHNITTSTELLENSYSTEM
SYSTEME D'INTERFACE DE COMMUNICATION ET DE MICROPHONE

(30) Priority: 30.08.2002 JP 2002252421
(43) Date of publication of application: 08.06.2005
(73) Proprietor: National University Corporation Nara Institute of Science and Technology, Ikoma-Shi, Nara 630-0192 (JP)
(72) Inventor: NAKAJIMA, Yoshitaka, Nara-shi, Nara 630-8101 (JP); SHOZAKAI, Makoto, Atsugi-shi, Kanagawa 243-0216 (JP)
(74) Representative: Kramer - Barske - Schmidtchen
(86) International application number: PCT/JP2003/011157
(87) International publication number: WO 2004/021738

(56) References cited:
- EP-A- 0 519 621
- EP-A1- 0 519 621
- EP-A1- 1 120 990
- WO-A-99/40755
- JP-A- 2 056 121
- JP-A- 4 316 300
- JP-A- 8 275 279
- JP-A- 61 288 596
- JP-A- 2000 338 986
- JP-A- 2002 135 390
- JP-U- 3 041 176
- US-B1- 6 343 269

## Description

### Technical Field

The present Invention relates to a microphone and a communication interface system, and in particular, to a microphone that samples a vibration sound (hereinafter referred to as a "non-audible murmur") containing a non-audible respiratory sound transmitted through internal soft tissues (this will hereinafter be referred to as "flesh conduction"), the respiratory sound being articulated by a variation in resonance filter characteristics associated with the motion of the phonatory organ, the respiratory sound not involving the regular vibration of the vocal cords, the respiratory sound being not intended to be heard by surrounding people, the respiratory sound involving a very small respiratory flow rate (expiratory flow rate and inspiratory flow rate), as well as a communication interface system using the microphone.

### Background Art

The rapid prevalence of cellular phones poses problems with the manners of speech in public transportation facilities such as trains or buses. Cellular phones use an interface having basically the same structure as that of previous analog telephones; the cellular phones pick up sounds transmitted through the air. Thus, disadvantageously, when a user, surrounded by people, makes a speech using a cellular phone, the people may be annoyed. Many people are expected to have had an unpleasant feeling when hearing someone speaking over the cellular phone on a train.

Further, as an essential disadvantage of air conduction, since the contents of the speech are heard by surrounding people, the information may leak and it is difficult to control publicity.

Furthermore, if a person with whom a user is talking on the cellular phone is speaking in a place with a loud background noise, the user cannot hear the person's voice well, which is mixed with the background noise.

On the other hand, speech recognition is a technique with an about 30 years' history. Owing to large vocabulary continuous speech recognition and the like, the speech recognition now exhibits a word recognition rate of at least 90% in terms of dictations. The speech recognition is a method of inputting data to a personal portable information terminal such as a wearable computer or a robot which method does not require any special learning technique so that anyone can use the method. Further, the speech recognition has been expected as a method of utilizing phonetic language, which has long been familiar to people as a human culture, directly for information transmission.

However, since the analog telephone period or since the start of development of the speech recognition technique, a speech input technique has long and always been dealing with a sound sampled through an external microphone located away from the mouth. In spite of the use of highly directional microphones and improvements in hardware and software for a reduction in noise, the target of analysis has always been a sound emitted from the mouth and transmitted through the air to reach an external microphone.

The speech recognition, which analyzes an ordinary sound transmitted through the air, has a long history of development. Products for the speech recognition have been developed which are easy to handle. In connection not only with command recognitions but also with dictations, these products are actually accurate enough to be adequately used in practice in a silent environment. Nevertheless, in fact, these products are rarely used to input data to computers or robots; they are utilized only in some car navigation systems.

This is because a fundamental disadvantage of the air conduction is the unavoidable mixture of external background noise. Even in a silent office, various noises may occur in unexpected occasions, thus inducing mis-recognitions. If a sound sampling device is provided on a body surface of a robot, information provided as a sound may be mistakenly recognized because of the background noise. The sound may be converted into a dangerous order.

Conversely, a problem with the use of the speech recognition technique in a silent environment is that uttered voices sound like noises for surrounding people. It is difficult for many people to use the speech recognition technique in an office unless the room is partitioned into a number of pieces. In practice, the use of the speech recognition technique is difficult.

In connection with this, the Japanese tendency to "consider speaking with reserve to be a virtue" and to "feel self-conscious about speaking", which is characteristic of the Japanese culture, is also a factor inhibiting the prevalence of the speech recognition.

This disadvantage is essentially critical because opportunities to use personal portable information terminal outdoors or in vehicles are expected to increase dramatically in the future.

The research and development of the speech recognition technique has not been started assuming global network environments or personal portable terminals as are available at present. Since wireless and wearable products are expected to be increasingly popular, it is much safer to use a personal portable information terminal to visually check and correct the result of speech recognition before sending information by wire or wireless.

As described above, with the cellular phone and speech recognition, the analysis target itself are disadvantageous in that noise may be mixed or occur in the target, that information may leak, and that corrections are difficult; with the cellular phone and speech recognition, normal speech signals transmitted through the air and sampled using an external microphone are converted into parameters for analysis.

It has been desirable to fundamentally eliminate these disadvantages to provide a new method of inputting data to personal portable information terminals used presently or in the near future. This method is simple, does not require training, and is based on the long cultural practice of human beings. It has also been desirable to provide a device that realizes the method.

A method based on bone conduction is known to sample normal speech signals usingmeans other than the air conduction. The principle of the bone conduction is that when the vocal cords are vibrated to emit a sound, the vibration of the vocal cords is transmitted to the skull and further to the spiral snail (internal ear), where the lymph is vibrated to generate an electric signal, which is sent to the auditory nerve, so that the brains recognize the sound.

A bone conduction speaker utilizes the principle of bone conduction that a sound is transmitted through the skull. The bone conduction speaker converts a sound into vibration of a vibrator and contacts the vibrator with the ear, the bone around the ear, the temple, or the mastoid to transmit the sound to the skull. Accordingly, the bone conduction speaker is utilized to allow even people having difficulty in hearing who have a disorder in the eardrum or auditory ossicles or people of advanced age to easily hear the sound in an environment with loud background noise.

For example, JP59-191996A discloses a technique for a listening instrument that utilizes both bone conduction and air conduction to contact a vibrator with the mastoid of the skull. However, the technique disclosed in the publication does not describe a method for sampling a human speech.

JP50-113217A discloses a technique for an acoustic reproducing apparatus that allows a user to use earphones and a vibrator installed on the mastoid of the skull to hear a sound sampled through a microphone and a sound sampled through a microphone installed on the Adam's apple, both sounds being emitted from the mouth and transmitted through the air. However, the technique disclosed in the publication does not describe a method of sampling a human speech through a microphone installed immediately below the mastoid.

JP4-316300A discloses an earphone type microphone and a technique for speech recognition utilizing the microphone. The technique disclosed in the publication samples the vibrations of a sound uttered by regularly vibrating the vocal cords or an internal sound such as a teeth gnashing sound; the vibrations are transmitted from the mouth to the external ear through the nose and via the auditory tube and the eardrum, the external ear consisting of the external auditory meatus and the conchal cavity. The publication insists that this technique can avoid the mixture or occurrence of noise, the leakage of information, and the difficulty in corrections and sample even a low voice such as a murmur. However, the technique disclosed in the publication does not clearly show that non-audible murmurs, which are uttered without regularly vibrating the vocal cords, can be sampled.

JP5-333894A discloses an earphone type microphone comprising a vibration sensor that senses a sound uttered by regularly vibrating the vocal cords and a body signal such as a teeth gnashing sound, as well as speech recognition utilizing the microphone. The technique disclosed in the publication clearly shows the ear hole, the periphery of the ear, the surface of the head, or the surface of the face as a site to which the vibration sensor is fixed. The vibration of the body sampled by the vibration sensor is utilized only to sortably extract only signals obtained in a time interval inwhichthe speaker spoke, fromall the signals sampled through the microphone, and to input the signals sortably extracted to a speech recognition apparatus. However, the technique disclosed in the publication does not clearly show that the vibration of the body can be utilized as an input to the speech recognition apparatus or for a speech over the cellular phone. Neither does the technique clearly show that non-audible murmurs, uttered without regularly vibrating the vocal cords, can be utilized as inputs to the speech recognition apparatus or for a speech over the cellular phone.

JP60-22193A discloses a technique for sorting and extracting only one of the sampled air-transmittedmicrophone signals which corresponds to a time interval in which a throat microphone installed on the Adam's apple or an earphone-type bone-conduction microphone detected the vibration of the body and inputting the sorted and extracted signal to a speech recognition apparatus. However, the technique disclosed in the publication does not clearly show that the vibration of the body can be utilized as an input to the speech recognition apparatus or for a speech over the cellular phone. Neither does the technique clearly show that non-audible murmurs, uttered without regularly vibrating the vocal cords, can be utilized as inputs to the speech recognition apparatus or for a speech over the cellular phone.

JP2-5099A discloses a technique for determining, in connection with a microphone signal that samples normal air conduction, a time interval in which a throat microphone or vibration sensor installed on the throat detects the regular vibration of the vocal cords, to be voiced, a time interval in which the regular vibration of the vocal cords is not detected but energy is at a predetermined level or higher, to be unvoiced, and a time interval in which the energy is at the predetermined level or lower, to be soundless. However, the technique disclosed in the publication does not clearly show that the vibration of the body can be utilized as an input to the speech recognition apparatus or for a speech over the cellular phone. Neither does the technique clearly show that non-audible murmurs, uttered without regularly vibrating the vocal cords, can be utilized as inputs to the speech recognition apparatus or for a speech over the cellular phone.

EP 1 120 990 A1 discloses a hand set provided with a bone conduction speaker portion, a microphone portion and a drive circuit storage portion, and is capable of being connected with a telephone set or a radio communication unit. The bone conduction speaker portion 2 is capable of being disposed adjacent to any desired area of the user's face when the microphone portion is disposed adjacent to the user's mouth.

US 6 343 269 B1 discloses a speech detection apparatus which uses a specular reflection light spot method in an apparatus for measuring shape information of an articulator.

It is an object of the present invention to provide a microphone and a communication interface system which avoid the mixture of acoustic background noise and which use a non-audible sound to prevent the contents of a speech from being heard by surrounding people, thus enabling information leakage to be controlled, the microphone and a communication interface system avoiding impairing a silent environment in an office or the like, the microphone and a communication interface system enabling sound information to be transmitted and input to provide a new input interface for a computer, a cellular phone, or a personal portable information terminal such as a wearable computer.

This is achieved by the microphone unit of claim 1 and the communication interface system of claim 3. Further advantageous embodiments of the invention are defined in the sub-claims.

### Disclosure of the Invention

The present invention relates to the fields of a speech over a remote dialog medium such as a cellular phone, command control based on speech recognition, and inputting of information such as characters and data. Instead of sampling sounds transmitted by air conduction (including a normal sound uttered by regularly vibrating the vocal cords and intended to be heard by surrounding people and which involves a high expiratory flow rate, a murmur uttered by regularly vibrating the vocal cords but not intended to be heard by surrounding people and which involves a lower expiratory flow rate, a low sound uttered by regularly vibrating the vocal cords and intended to be heard by surrounding people and which involves a lower expiratory flow rate, and a whisper uttered without regularly vibrating the vocal cords and intended to be heard by surrounding people and which involves a lower expiratory flow rate) using a microphone located away from the mouth, the present invention uses a microphone installed on the skin on the sternocleidomastoid muscle immediately below the mastoid (a slightly projecting bone behind the ear) of the skull, that is, in the lower part of the skin behind the auricle (the installed position will hereinafter be referred to as a position "immediately below the mastoid") to sample a vibration sound (hereinafter referred to as an "non-audible murmur") containing a non-audible respiratory sound transmitted through internal soft tissues (this will hereinafter be referred to as "flesh conduction"), the respiratory sound being articulated by a variation in resonance filter characteristics associated with the motion of the phonatory organ, the respiratory sound not involving the regular vibration of the vocal cords, the respiratory sound being not intended to be heard by surrounding people, the respiratory sound involving a very small respiratory flow rate (expiratory flow rate and inspiratory flow rate) . This makes it possible to avoid the mixture of acoustic background noise and use a non-audible sound to prevent the contents of a speech from being heard by surrounding people, thus enabling information leakage to be controlled. It is further possible to avoid impairing a silent environment in an office or the like and enable sound information to be transmitted and input to provide a new input interface for a computer, a cellular phone, or a personal portable information terminal such as a wearable computer.

Thus, a microphone according to the present invention is characterized by sampling one of a non-audible murmur articulated by a variation in resonance filter characteristics associated with motion of the phonatory organ, the non-audible murmur not involving regular vibration of the vocal cords, the non-audible murmur being a vibration sound generated when an externally non-audible respiratory sound is transmitted through internal soft tissues, a whisper which is audible but is uttered without regularly vibrating the vocal cords, a sound uttered by regularly vibrating the vocal cords and including a low voice or a murmur, and various sounds such as a teeth gnashing sound and a tongue clucking sound, and by being installed on a surface of the skin on the sternocleidomastoid muscle immediately below the mastoid of the skull, that is, in the lower part of the skin behind the auricle. This makes it possible to sample a non-audible murmur for a speech over a cellular phone or the like or a speech recognition process. Further, a single apparatus can be used to sample audible sounds other than the non-audible murmur.

The microphone further includes a diaphragm installed on the surface of the skin and a sucker that sticks to the diaphragm. This configuration allows the diaphragm to fix the sucker and to cause echoes in a very small closed space. Further, the sucker can be installed and removed at any time simply by sticking the single diaphragm to the body surface.

The microphone may be integrated with a head-installed object such as glasses, a headphone, a supra-aural earphone, a cap, or a helmet which is installed on the human head. The microphone can be installed so as not to appear odd by being integrated with the head-installed object.

A communication interface system according to the present invention is characterized by including the above microphone and a signal processing apparatus that processes a signal sampled through the microphone and in that a result of processing by the signal processing apparatus is used for communications. It is possible to execute processing such as amplification or modulation on a signal corresponding to a non-audible murmur sampled through the microphone and then to use the processed vibration sound for communications by a portable terminal as it is or after converting the vibration sound into parameters. If the result of processing is used for a cellular phone, then the user, surrounded by people, can make a speech without having the contents of the speech to be heard by the surrounding people.

The communication interface system may be characterized in that the signal processing apparatus includes an analog digital converting section that quantizes a signal sampled through the microphone, a processor section that processes a result of the quantization by the analog digital converting section, and a transmission section that transmits a result of the processing by the processor section to an external apparatus. With this configuration, for example, an apparatus in a mobile telephone network can process the processed vibration sound as it is or after converting the sound into a parameterized signal. This serves to simplify the configuration of the signal processing apparatus.

The communication interface system may further be characterized in that the signal processing apparatus includes an analog digital converting section that quantizes a signal sampled through the microphone and a transmission section that transmits a result of the quantization by the analog digital converting section to an external apparatus and in that the external apparatus processes the result of the quantization. With this configuration, for example, an apparatus in a mobile telephone network can process the result of the quantization. This serves to simplify the configuration of the signal processing apparatus.

The communication interface system may further be characterized in that the signal processing apparatus includes an analog digital converting section that quantizes a signal sampled through the microphone, a processor section that processes a result of the quantization by the analog digital converting section, and a speech recognition section that executes a speech recognition process on a result of the processing by the processor section. With the signal processing apparatus thus configured, for a non-audible murmur, a signal for a processed vibration sound can be subjected to a speech recognition process as it is or after being converted into parameters.

The communication interface system may further be characterized by further including a transmission section that transmits a result of the speech recognition by the speech recognition section to an external apparatus. The result of the speech recognition can be utilized for various processes by being transmitted to, for example, a mobile telephone network.

The communication interface system may further be characterized in that an apparatus in a mobile telephone network executes a speech recognition process on the result of the processing by the processor section, the result being transmitted by the transmitting section. When the apparatus in the mobile telephone network thus executes a speech recognition process, the configuration of the signal processing apparatus can be simplified.

The communication interface system may further be characterized in that the signal processing executed by the signal processing apparatus is a modulating process in which the process section modulates the signal into an audible sound. Such a modulating process enables a speech over the cellular phone or the like.

The communication interface system may further be characterized in that the modulating process applies a fundamental frequency of the vocal cords to the non-audible murmur to convert the non-audible murmur into an audible sound involving the regular vibration of the vocal cords. A morphing process or the like enables a speech over the cellular phone. The fundamental frequency of the vocal cords may be calculated utilizing the well-known correlation between the formant frequency and the fundamental frequency. That is, the fundamental frequency of the vocal cords may be assumed on the basis of the formant frequency of the non-audible murmur.

The communication interface system may further be characterized in that the modulating process converts a spectrum of the non-audible murmur not involving the regular vibration of the vocal cords into a spectrum of an audible sound uttered using the regular vibration of the vocal cords. The conversion into the spectrum of an audible sound enables the signal to be utilized for a speech over the cellular phone.

The communication interface system may further be characterized in that the modulating process uses the spectrum of the non-audible murmur and a speech recognition apparatus to recognize phonetic units such as syllables, semi-syllables, phonemes, two-juncture phonemes, and three-juncture phonemes and uses a speech synthesis technique to convert the phonetic units recognized into an audible sound uttered using the regular vibration of the vocal cords. This enables a speech utilizing a synthesized sound.

The communication interface system may further be characterized in that an input gain is controlled in accordance with a magnitude of a dynamic range of a sound sampled through the microphone. This enables the signal to be appropriately processed in accordance with the magnitude of the dynamic range. The input gain may be controlled using an analog circuit or software based on well-known automatic gain control.

The communication interface system may further be characterized in that the speech recognition section appropriately executes speech recognition utilizing an acoustic model of at least one of the non-audible murmur, a whisper which is audible but is uttered without regularly vibrating the vocal cords, a sound uttered by regularly vibrating the vocal cords and including a low voice or a murmur, and various sounds such as a teeth gnashing sound and a tongue clucking sound. This enables appropriate speech recognition to be executed on audible sounds other than the non-audible murmur. Those skilled in the art can easily construct the acoustic model of any of these various sounds on the basis of a hidden Markov model.

In short, the present invention utilizes the non-audible murmur (NAM) for communications. Almost like a normal sound uttered by regularly vibrating the vocal cords utilizing the speech motion of the articulatory organs such as the tongue, the lips, the jaw, and the soft palate, the non-audible murmur is articulated by a variation in its resonance filter characteristics and transmitted through the flesh.

According to the present invention, the stethoscope-type microphone, which utilizes echoes in a very small closed space, is installed immediately below and in tight contact with the mastoid. When a vibration sound obtained when a non-audible murmur sampled through the microphone is transmitted through the flesh is amplified and listened to, it can be determined to be a human voice like a whisper. Furthermore, in a normal environment, people within a radius of 1 m cannot hear this sound. The vibration sound obtained when the non-audible murmur sampled through the microphone is transmitted through the flesh instead of the air is analyzed and converted into parameters.

After being amplified, the vibration sound resulting from the flesh transmission can be heard and understood by human beings. Consequently, the vibration sound can be used for a speech over the cellular phone as it is. Further, the sound can be used for a speech over the cellular phone by undergoing a morphing process to convert into an audible one.

Moreover, speech recognition can be carried out by utilizing the hidden Markov model (hereinafter sometimes simply referred to as HMM), conventionally used for speech recognition, to replace an acoustic model of a normal sound with an acoustic model of a vibration sound obtained when a non-audible murmur is transmitted through the flesh. This makes it possible to recognize a kind of soundless state. Therefore, the present invention can be utilized as a new method of inputting data to a personal portable information terminal.

As described above, the present invention proposes that the non-audible murmur be used as a communication interface between people or between a person and a computer.

### Brief Description of the Drawings

Figure 1 is a block diagram showing a configuration in which a communication interface system according to the present invention is applied to a cellular phone system;
Figure 2 is a block diagram showing a configuration in which the communication interface system according to the present invention is applied to a speech recognition system;
Figures 3A and 3B are views showing the appearance of an example of a microphone according to the present invention;
Figure 4 is a vertical sectional view showing the appearance of the example of the microphone according to the present invention;
Figure 5 is a view showing the location the microphone according to the present invention is installed;
Figure 6 is a view showing the waveform of a vibration sound sampled if the microphone is installed on the thyroid cartilage (Adam's apple);
Figure 7 is a view showing the spectrum of the vibration sound sampled if the microphone is installed on the thyroid cartilage (Adam's apple);
Figure 8 is a view showing the waveform of a vibration sound sampled if the microphone is installed on the bottom surface of the jaw;
Figure 9 is a view showing the spectrum of the vibration sound sampled if the microphone is installed on the bottom surface of the jaw;
Figure 10 is a view showing the waveform of a vibration sound sampled if the microphone is installed on the parotid portion (or at a corner of the lower jaw bone);
Figure 11 is a view showing the spectrum of the vibration sound sampled if the microphone is installed on the parotid portion (or at the corner of the lower jaw bone);
Figure 12 is a view showing the waveform of a vibration sound sampled if the microphone is installed on the side neck portion;
Figure 13 is a view showing the spectrum of the vibration sound sampled if the microphone is installed on the side neck portion;
Figure 14 is a view showing the waveform of a vibration sound sampled if the microphone is installed immediately below the mastoid;
Figure 15 is a view showing the spectrum of the vibration sound sampled if the microphone is installed immediately below the mastoid;
Figure 16 is a view showing the waveform of a vibration sound sampled if the microphone is installed on the mastoid;
Figure 17 is a view showing the spectrum of the vibration sound sampled if the microphone is installed on the mastoid;
Figure 18 is a view showing the waveform of a vibration sound sampled if the microphone is installed on the cheekbone (a part of the side head immediately in front of the ear);
Figure 19 is a view showing the spectrum of the vibration sound sampled if the microphone is installed on the cheekbone (a part of the side head immediately in front of the ear);
Figure 20 is a view showing the waveform of a vibration sound sampled if the microphone is installed on the cheek portion (the side of the mouth);
Figure 21 is a view showing the spectrum of the vibration sound sampled if the microphone is installed on the cheek portion (the side of the mouth);
Figure 22 is a view showing a comparison of the sound waveforms and spectra of a normal sound sampled through a normal external microphone, a whisper sampled through the normal external microphone, and a non-audible murmur sampled through a body surface-installed stethoscope-type microphone according to the present invention installed at the parotid site, which is not the position according to the present invention;
Figure 23 is a view showing the sound waveform, spectrum, and F0 (a fundamental frequency resulting from the regular vibration of the vocal cords) of a non-audible murmur sampled at an installed position according to the present invention using the body surface-installed stethoscope-type microphone;
Figure 24 is a view showing the result of automatic labeling based on the spectrum of a non-audible murmur sampled at an installed position according to the present invention using the body surface-installed stethoscope-type microphone and the result of HMM speech recognition using a non-audible murmur model;
Figure 25 is a view showing an initial part of a monophone (the number of contaminations in a contaminated normal distribution 16) definition file for an HMM acoustic model created on the basis of a non-audible murmur;
Figure 26 is a diagram showing the results of recognition of a non-audible murmur using an acoustic model incorporated into a large-vocabulary continuous speech recognition system;
Figure 27 is a diagram showing the result of automatic alignment segmentation;
Figure 28 is a table showing word recognition performance;
Figure 29 is a view showing the microphone integrated with glasses;
Figure 30 is a view showing the microphone integrated with a headphone;
Figure 31 is a view showing the microphone integrated with a supra-aural earphone;
Figure 32 is a view showing the microphone integrated with a cap;
Figure 33 is a view showing the microphone integrated with a helmet;
Figure 34 is a block diagram showing a variation of a communication interface system;
Figure 35 is a block diagram showing another variation of the communication interface system;
Figure 36 is a block diagram showing a variation of a communication interface system having a speech recognition processing function; and
Figure 37 is a block diagram showing a variation of the communication interface system in Figure 36.

Best Mode for Carrying Out the Invention

Now, embodiments of the present invention will be described with reference to the drawings. In each figure referred to in the description below, parts comparable to those in other figures are denoted by the same reference numerals.

Japanese speeches are mostly made utilizing expiration of respiration. Description will be given below of a non-audible murmur uttered utilizing expiration. However, the present invention can also be carried out in connection with a non-audible murmur uttered utilizing inspiration.

Further, the non-audible murmur need not be heard by surrounding people. In this connection, the non-audible murmur is different from a whisper intended to positively have surrounding people hear it. The present invention is **characterized in that** the non-audible murmur is sampled through a microphone utilizing flesh conduction instead of air conduction.

### (Cellular Phone System)

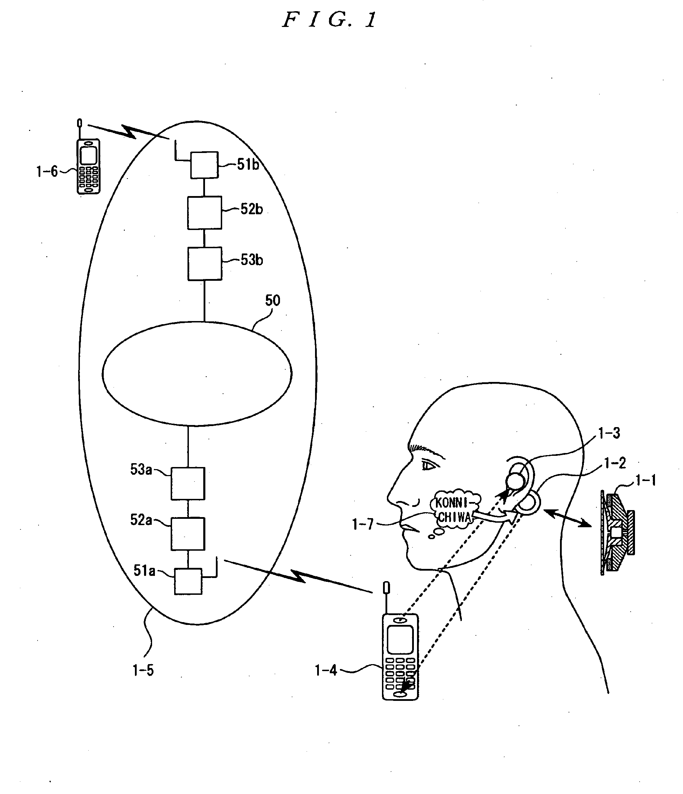

Figure 1 is a schematic view showing a configuration in which a communication interface system according to the present invention is applied to a cellular phone system.

A stethoscope-type microphone 1-1 is installed by being stuck to immediately below the mastoid 1-2. An earphone or speaker 1-3 is installed in the ear hole.

The stethoscope-type microphone 1-1 and the earphone 1-3 are connected to a cellular phone 1-4 using wired or wireless communication means. A speaker may be used instead of the earphone 1-3.

A wireless network 1-5 includes, for example, wireless base stations 51a and 51b, base station control apparatuses 52a and 52b, exchanges 53a and 53b, and a communication network 50. In the present example, the cellular phone 1-4 communicates with the wireless base station 51a. The cellular phone 1-6 communicates with the wireless base station 51b. This enables communications between the cellular phones 1-4 and 1-6.

Almost like a normal sound uttered by regularly vibrating the vocal cords utilizing the speechmotion of the articulatory organs such as the tongue, the lips, the jaw, and the soft palate, a non-audible murmur uttered by a user without regularly vibrating the vocal cords is articulated by a variation in its resonance filter characteristics. The non-audible murmur is then transmitted through the flesh and reaches the position immediately below the mastoid 1-2.

The stethoscope-type microphone 1-1, installed immediately below the mastoid 1-2, samples the vibration sound of the non-audible murmur 1-7 reaching the position immediately below the mastoid 1-2. A capacitor microphone converts the vibration sound into an electric signal. The wired or wireless communication means transmits the signal to the cellular phone 1-4.

The vibration sound of the non-audible murmur transmitted to the cellular phone 1-4 is transmitted via the wireless network 1-5 to the cellular phone 1-6 carried by a person with whom a user of the cellular phone 1-4 is talking.

On the other hand, the voice of the person with whom the user of the cellular phone 1-4 is talking is transmitted to the earphone or speaker 1-3 via the cellular phone 1-6, wireless network 1-5, and cellular phone 1-4 using the wired or wireless communication means. The earphone 1-3 is not required if the user listens to the person's voice directly over the cellular phone 1-4.

Thus, the user can talk with the person carrying the cellular phone 1-6. In this case, since the non-audible murmur 1-7 is uttered, it is not be heard by people standing, for example, within a radius of 1 m. Further, the dialog does not give trouble to the people standing within a radius of 1 m.

In short, in the present example, the communication interface system is composed of the combination of the microphone and the cellular phone, serving as a signal processing apparatus.

### (Speech Recognition System)

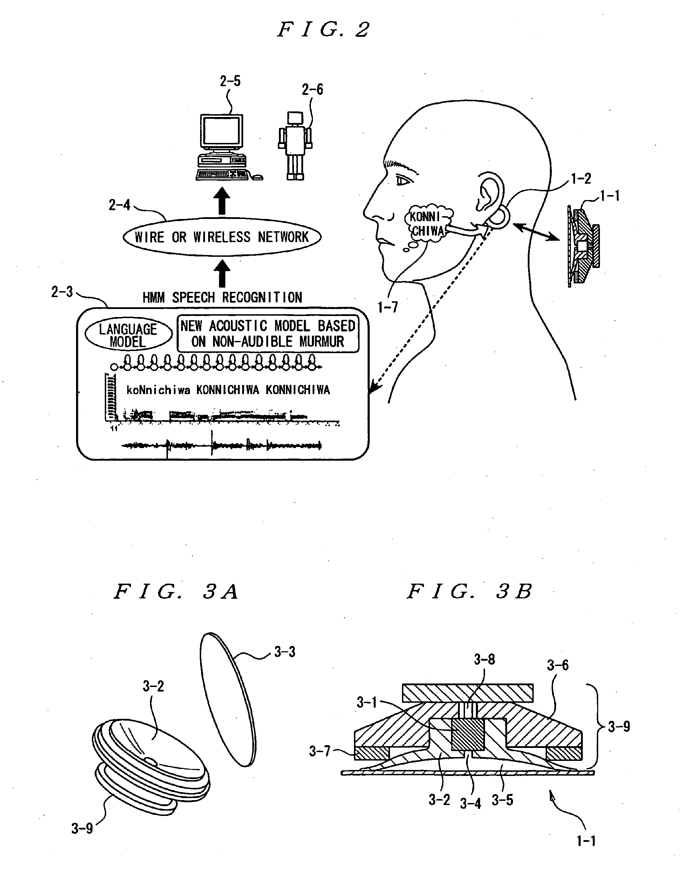

Figure 2 is a schematic view showing a configuration in which the communication interface system according to the present invention is applied to a speech recognition system.

As in the case of Figure 1, the stethoscope-type microphone 1-1 is installed by being stuck to immediately below the mastoid 1-2, that is, to the lower portion of a part of the body surface behind the skull.

Almost like a normal sound uttered by regularly vibrating the vocal cords utilizing the speechmotion of the articulatory organs such as the tongue, the lips, the jaw, and the soft palate, a non-audible murmur 1-7 obtained when the user utters "konnichiwa" is articulated by a variation in its resonance filter characteristics. The non-audible murmur is then transmitted through the flesh and reaches the position immediately below the mastoid 1-2.

The stethoscope-type microphone 1-1 samples the vibration sound of the non-audible murmur "konnichiwa" 1-7 reaching the position immediately below the mastoid 1-2. The wired or wireless communication means then transmits the signal to a personal portable information terminal 2-3.

A speech recognition function incorporated into the personal portable information terminal 2-3 recognizes the vibration sound of the non-audible murmur "konnichiwa" transmitted to the personal portable information terminal 2-3, as the sound "konnichiwa".

The string "konnichiwa", the result of the speech recognition, is transmitted to a computer 2-5 or a robot 2-6 via a wired or wireless network 2-4.

The computer 2-5 or the robot 2-6 generates a response corresponding to the string and composed of a sound or an image. The computer 2-5 or the robot 2-6 returns the response to the personal portable information terminal 2-3 via the wired or wireless network 2-4.

The personal portable information terminal 2-3 outputs the information to the user utilizing a function for speech synthesis or image display.

In this case, since the non-audible murmur is uttered, it is not be heard by people standing within a radius of 1 m.

In short, in the present example, the communication interface system is composed of the combination of the microphone and the cellular phone, serving as a signal processing apparatus.

### (Configuration of the Microphone)

Figures 3A and 3B are sectional views of the stethoscope-type microphone 1-1, which is the main point of the present invention. In order to sense a very weak vibration propagating from the body surface on the basis of flesh conduction, it is first indispensable to improve a microphone that is a sound collector. The results of experiments using a medical membrane type stethoscope indicate that a respiratory sound can be heard by applying the stethoscope to a certain site of the head. The results also indicate that the addition of speech motion allows the respiratory sound of the non-audible murmur to be articulated by the resonance filter characteristics of the vocal tract as in the case of a sound uttered by regularly vibrating the vocal cords; as a result, a sound like a whisper can be heard. Thus, the inventors consider that a method of applying echoes in a very small closed space in this membrane type stethoscope is effective.

To realize a method of tightly contacting the stethoscope with the body surface and a structure that can remain installed on the body surface all day long, the inventors employed a configuration such as the one shown in Figures 3A and 3B. That is, a circular diaphragm 3-3 made of polyester and having an adhesive face (the diaphragm corresponds to the membrane of the stethoscope) was combined with a sucker portion 3-9 that sticks to the diaphragm 3-3. A synthetic resin sucker (elastomer resin) 3-2 was provided in the sucker portion 3-9. The synthetic resin sucker 3-2 sticking to a surface of the diaphragm 3-3 was used as a microphone.

The diaphragm 3-3 plays both roles of fixing the sucker portion 3-9 and transmitting vibration and also plays both roles of fixing the sucker and causing echoes in the very small closed space. This enables the sucker portion 3-9 to be always installed or removed simply by sticking a single disposable diaphragm to the body surface. Further, the capacitor microphone 3-1 was embedded in a handle portion of the sucker portion 3-9. The surrounding synthetic resin also provided a sound insulating function. The handle portion was covered with a sound insulating rubber portion 3-6 composed of special synthetic rubber for preventing the vibration of AV (Audio-Visual) equipment. A gap portion 3-8 was filled with an epoxy resin adhesive to improve sound insulation and closeness.

The microphone thus configured senses a very weak vibration in the body which is free from an external direct noise. Accordingly, the microphone can always be contacted tightly with the body surface. Further, the microphone utilizes the principle of echoes in the very small closed space in the medical membrane type stethoscope. Therefore, a very small closed space can be formed using the diaphragm and sucker stuck together.

The stethoscope-type microphone is light and inexpensive. The inventors conducted experiments in which they kept wearing the microphone all day long. The microphone did not come off the body surface. Further, the microphone did not make the inventors unpleasant because it covers a smaller area of the ear than a headphone of portable music instrument.

### (Microphone Amplifier)

A microphone amplifier required to drive the capacitor microphone 3-1 was produced using a commercially available monaural microphone amplifier kit. The inventors produced a microphone amplifier that was a separate device as small as a cigarette box. Data was input to a digital sampling sound source board of a computer through the microphone amplifier. These components may have reduced sizes and may be composed of chips and wirelessly operated. The components can be embedded in the gap portion 3-8 and the sound insulating rubber portion 3-6.

A non-audible murmur can be heard by connecting an output of the microphone amplifier directly to an external input of a main amplifier of audio equipment. The contents of a speech can be determined and understood as a voice like a whisper. The inventors have also found that the microphone can be used in place of a stethoscope by being installed on the breast; a respiratory sound, a heartbeat, and a heart noise can be heard. A sound signal for the non-audible murmur contains vocal tract resonance filter characteristics. Accordingly, even after being compressed using a sound hybrid coding technique PSI-CELP (Pitch Synchronous Innovation-Code Excited Linear Prediction), used for the current cellular phones, the signal can be utilized by being provided with a sound source waveform at a fundamental frequency. The signal can also be converted into a voice similar to a normal sound.

### (Installed Position of the Microphone)

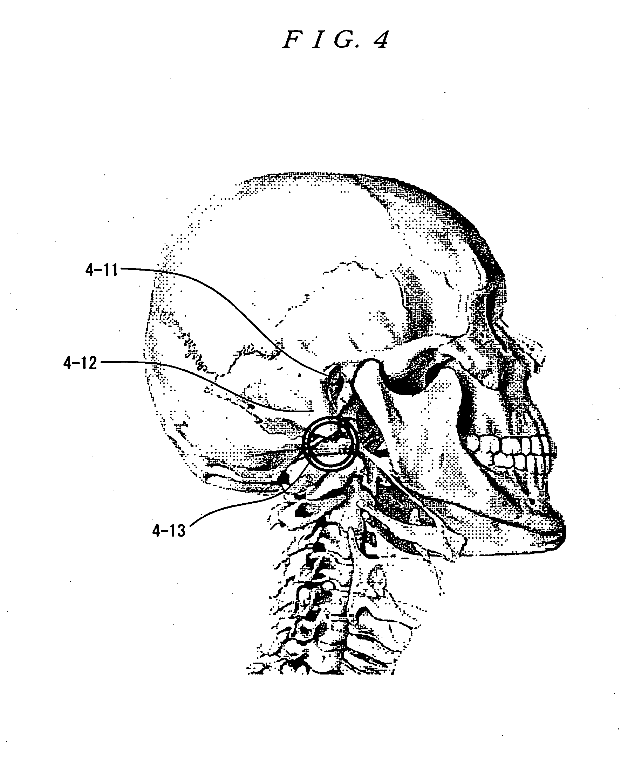

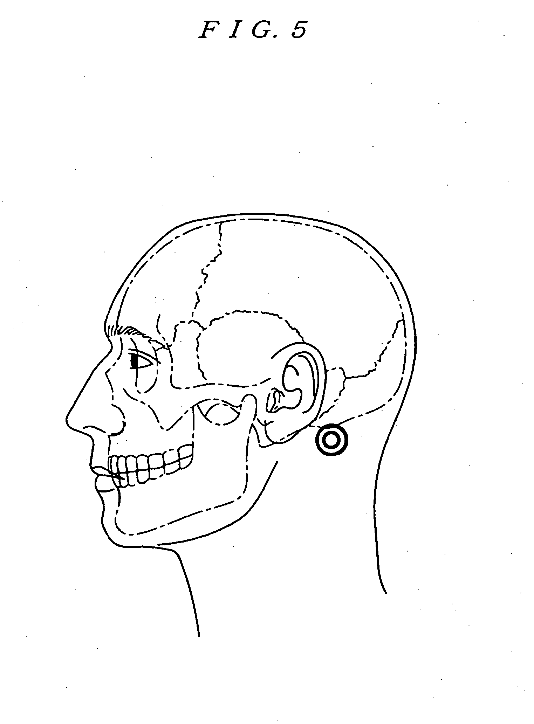

The stethoscope-type microphone is installed at the position shown in Figures 4 and 5. This will be described below compared to installations at other positions.

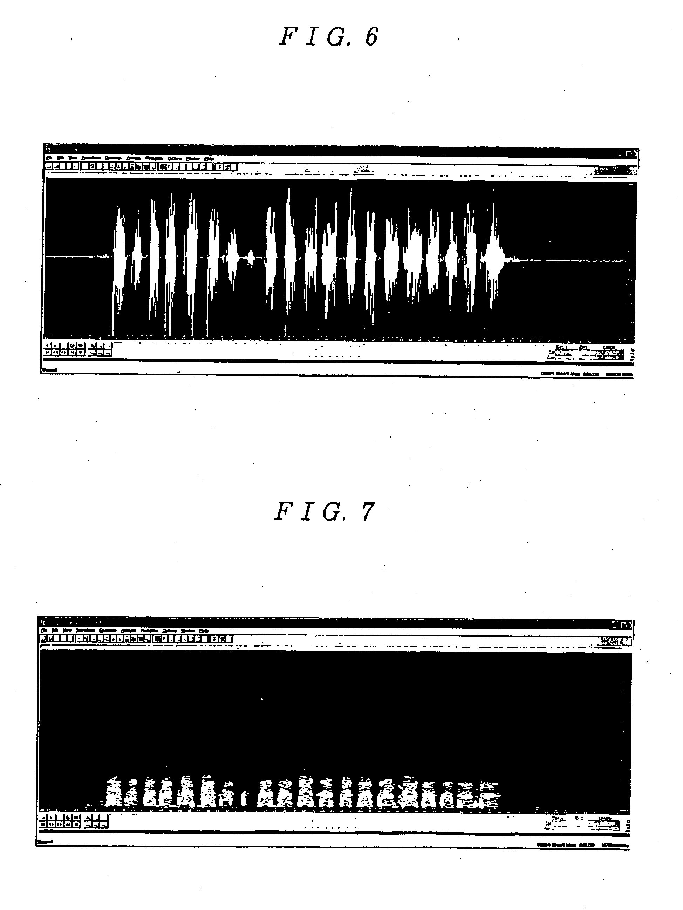

The non-audible murmur can be heard at many sites including the lower jaw, the parotid portion, and the side neck portion. Figures 6 to 21 show the waveforms and spectra of the sound "kakikukekotachitsutetopapipupepobabibubebo" uttered in the form of an inaudible murmur with the stethoscope-type microphone installed on the thyroid cartilage (Adam's apple), the bottom surface of the jaw, the parotid portion (a corner of the lower jaw bone), or the side neck portion, or immediately below the mastoid, or on the mastoid, the cheekbone (a part of the side head immediately in front of the ear), or the cheek portion (the side of the mouth).

### (Installed on the Thyroid Cartilage)

Figures 6 and 7 show the waveform and spectrum, respectively, of the inaudible murmur obtained when the stethoscope-type microphone is installed on the thyroid cartilage (Adam's apple).

As shown in Figure 6, the vibration sound of the inaudible murmur can be sampled with a high power. However, the consonants have too high power compared to the vowels and overflow in most cases (vertical lines in Figure 7). The overflowed consonants sound like explosions and cannot be heard. Reducing the gain of the microphone amplifier avoids the overflow. However, as shown in Figure 7, this prevents a difference in formant unique to a quintphthong from being observed in the spectrum of the vowels, and the phonemes could not be clearly recognized when concentrating on the sound (Installed on the Bottom Surface of the Jaw, the Parotid Portion, or the Side Neck Portion)

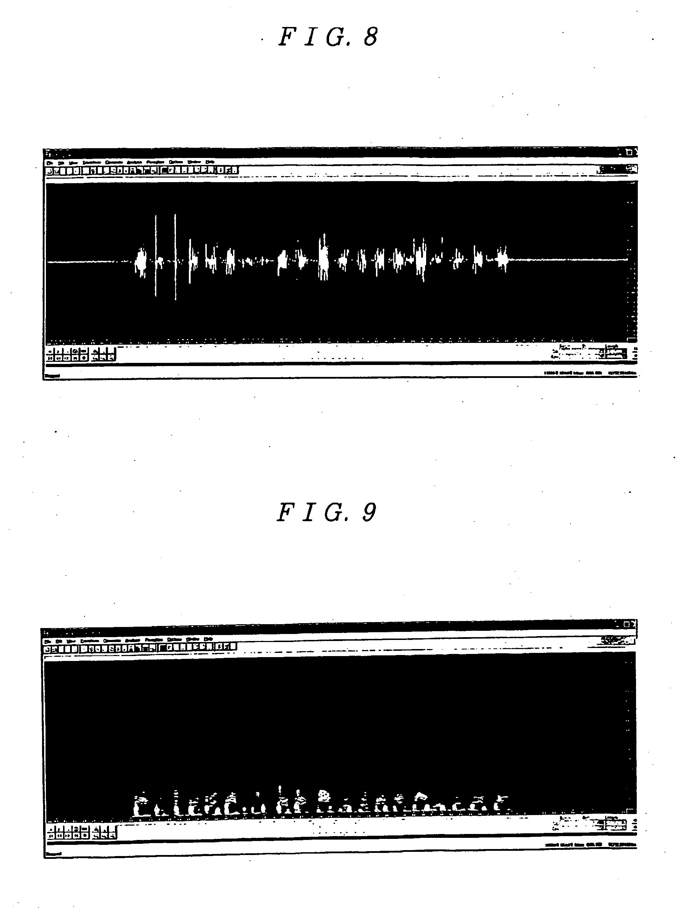

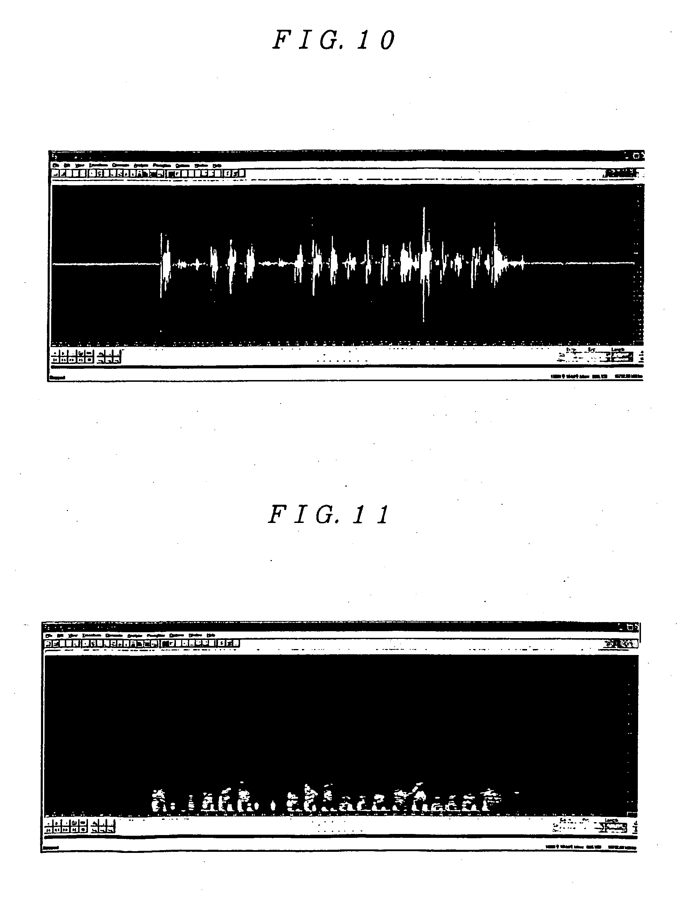

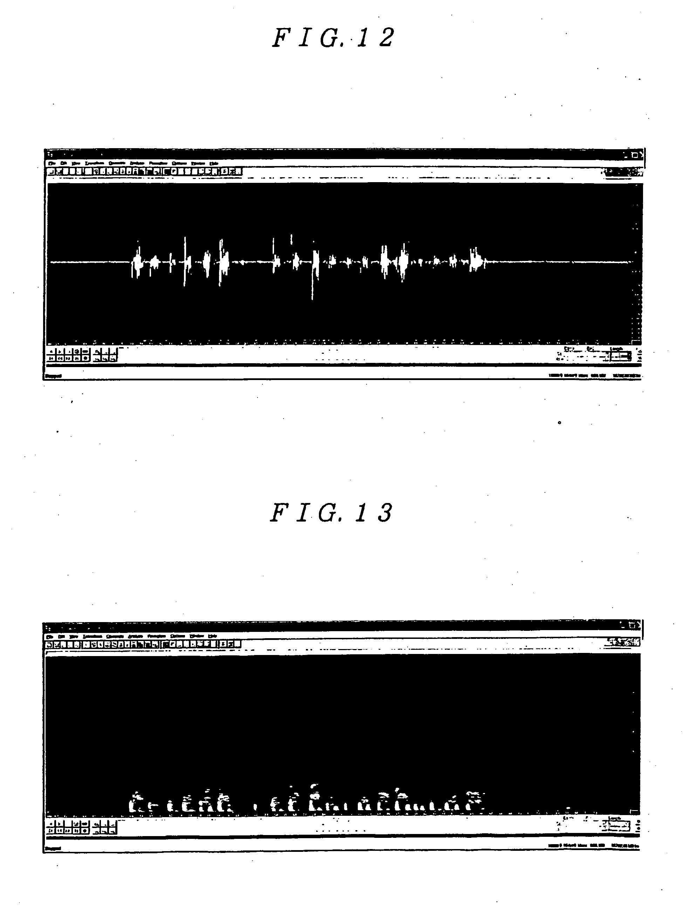

Figures 8 and 9 show the waveform and spectrum, respectively, of the inaudible murmur obtained when the stethoscope-type microphone is installed on the bottom surface of the jaw. Figures 10 and 11 show the waveform and spectrum, respectively, of the inaudible murmur obtained when the stethoscope-type microphone is installed on the parotid portion (the corner of the lower jaw bone). Figures 12 and 13 show the waveform and spectrum, respectively, of the inaudible murmur obtained when the stethoscope-type microphone is installed on the side neck portion.

When the stethoscope-type microphone is installed on the bottom surface of the jaw, the parotid portion, or the side neck portion, the sound waveform often overflows as shown in Figures 8, 10, and 12. It is difficult to adjust the gain of the microphone amplifier so as to prevent the overflow. The amplitudes of consonants are likely to overflow. Accordingly, the gain of the microphone amplifier must be sharply reduced in order to avoid overflowing the amplitudes of all the consonants. A reduction in gain weakens the energy of fortmants of vowels, making it difficult to distinguish the vowels from one another, as shown in Figures 9, 11 and 13. When the user listens to the sound carefully, consonants the amplitudes of which overflow sound like explosions. The user can hear known sentences but not unknown ones.

### (Installed Immediately below the Mastoid)

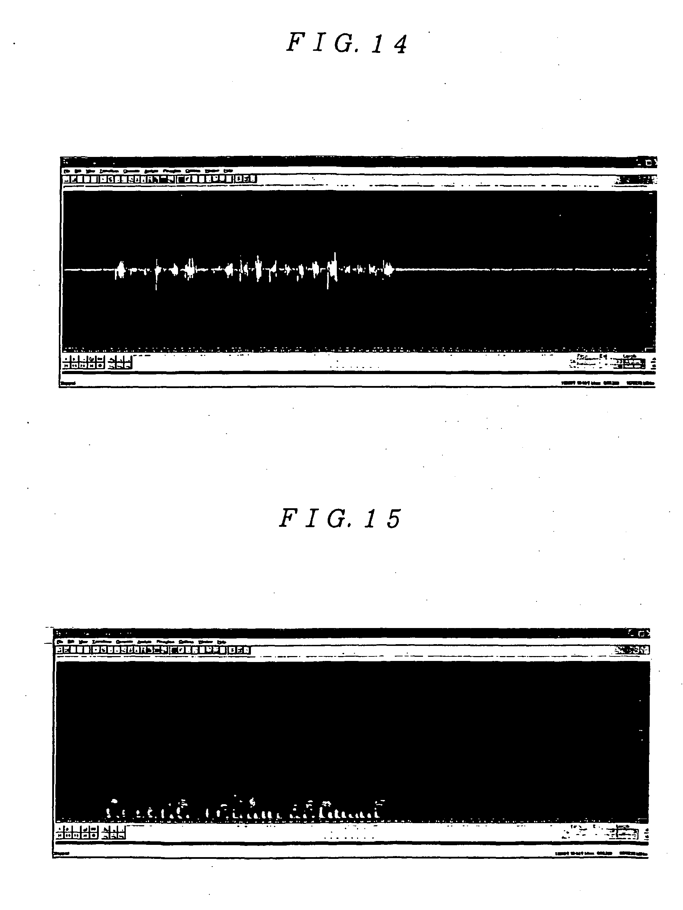

Figures 14 and 15 show the waveform and spectrum, respectively, of a sound obtained when the stethoscope-type microphone is installed immediately below the mastoid.

As shown in Figure 14, in contrast to the other sites, a significant increase in gain does not cause consonants to overflow. Accordingly, the user has no difficulty in adjusting the gain of the microphone amplifier. Further, compared to the other sites, both vowels and consonants are markedly articulate.

### (Installed on the Mastoid)

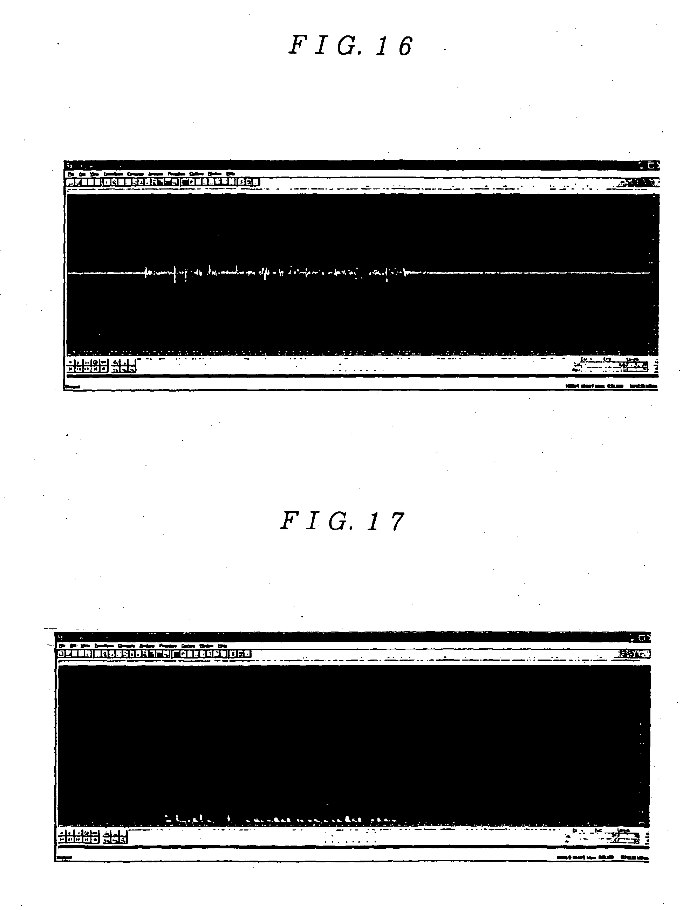

Figures 16 and 17 show the waveform and spectrum, respectively, of the inaudible murmur obtained when the stethoscope-type microphone is installed on the mastoid.

As shown in Figure 16, compared to Figure 14, the articulation of the consonants is almost the same as that of the vowels, but the power is evidently low. Sporadically observed noises result from hair. Noise from the hair is likely to be picked up because the diaphragm of the stethoscope-type microphone contacts with the hair.

### (Installed on the Cheekbone)

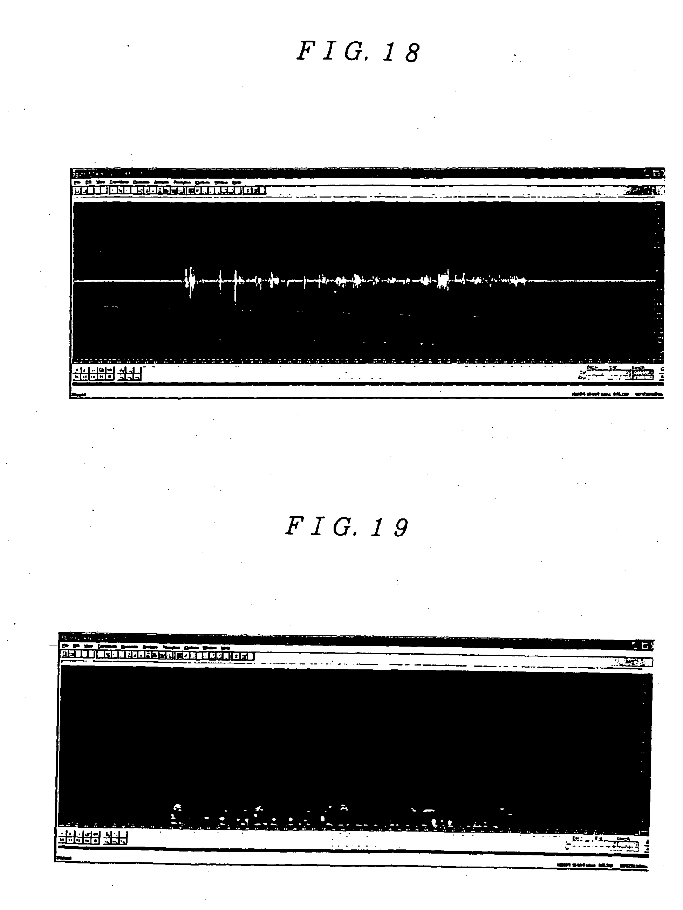

Figures 18 and 19 show the waveform and spectrum, respectively, of the inaudible murmur obtained when the stethoscope-type microphone is installed on the cheekbone portion (a part of the side head immediately in front of the ear).

As shown in Figures 18 and 19, both the articulation and the power ratio of the vowels to the consonants are good as in the case of the position immediately below the mastoid. However, noise resulting from the motion of the jaw is contained in the signal. If the effect of the noise can be eased, the cheekbone portion (the part of the side head immediately in front of the ear) is the most suitable installed position next to the position immediately below the mastoid.

### (Installed on the Cheek Portion)

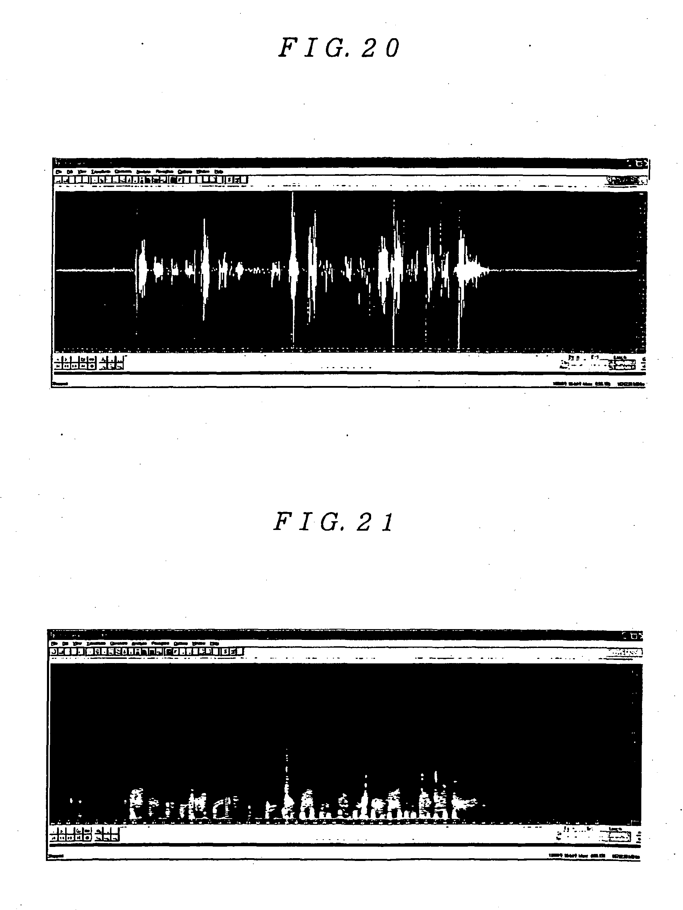

Figures 20 and 21 show the waveform and spectrum, respectively, of the inaudible murmur obtained when the stethoscope-type microphone is installed on the cheek portion (the side of the mouth).

As shown in Figure 20, noise attributed to the motion of the mouth is prone to be contained in the signal. Consequently, the amplitudes of many consonants overflow. However, the third (in rare cases, the fourth) formant may appear at this site.

### (Discussions of the Results for the Installed Positions)

As described above, when the stethoscope-type microphone is installed on the thyroid cartilage (Adam's apple), the bottom surface of the jaw, the parotid portion (a corner of the lower jaw bone), or the side neck portion, or the cheek portion (the side of the mouth), consonants such as fricative and explosive sounds have very high power in connection with flesh conduction and often sound like explosions. In contrast, the vowels and semivowels are distinguished from one another on the basis of a difference in the resonance structure of air in the vocal tract. Consequently, the vowels and the semivowels have low power. In fact, when an acoustic model is created using a sound sampled by installing the stethoscope-type microphone at one of these sites, the resultant system relatively favorably recognizes the vowels, while substantially failing to distinguish the consonants from one another.

On the other hand, when the stethoscope-type microphone is installed on the mastoid or the cheekbone portion (the part of the side head immediately in front of the ear), the amplitudes of consonants do not overflow, but compared to flesh conduction, bone conduction generally does not transmit vibration easily. Further, the sound obtained is low, and the signal-to-noise ratio is low.

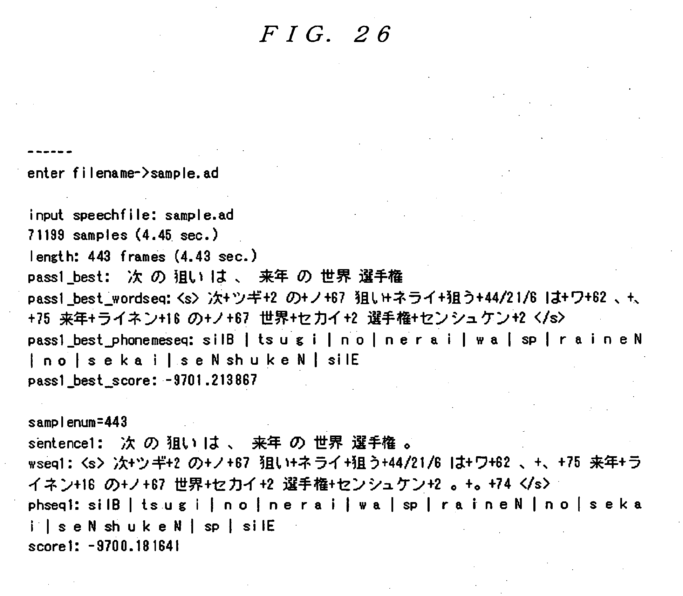

The signal-to-noise ratio is measured for the waveform in Figure 14 sampled by installing the stethoscope-type microphone immediately below the mastoid and for the waveform in Figure 26 sampled by installing the stethoscope-type microphone on the mastoid. The measurement is 19 decibels for the former waveform, while it is 11 decibels for the latter waveform. Thus, there is a large difference of 8 decibels between these waveforms. This difference corresponds to a

30% improvement in performance (60 to 90%) in connection with the speech recognition engine Julius (twenty thousand word level), which is free basic software for Japanese dictations.

Thus, as a result of a comparison of speech recognition rates obtained at the various sites, the ratio of the peak power of the vowels to the peak power of the consonants is determined to be closest to the value "1" at the position immediately below the mastoid.

### (Position Immediately below the Mastoid)

The position of the site will be described in detail with reference to Figure 4.

The optimum position for the vowel-to-consonant power ratio is obtained when the center of the diaphragm of the stethoscope-type microphone 1-1 is located at a site 4-13 immediately below the mastoid 4-12 of the skull.

Likewise, Figure 5 shows the site immediately below the mastoid in a double circle, the site being optimum for installation of the stethoscope-type microphone.

The optimum installation site has no hair, mustache, or beard. If the user has long hair, the microphone is completely hidden between the auricle and the hair. Further, compared to the other sites, the optimum installation site has thick soft tissues (flesh and the like) . At this site, the signal is not mixed with any noise that may result from the speechmotionof the articulatory organs such as the tongue, the lips, the jaw, or the soft palate. Moreover, the site is located on a gap inside the body in which no bone is present. As a result, the vibration sound of the non-audible murmur can be acquired with a high gain.

When applying a stethoscope to the surface of the body to listen to internal sounds, doctors conventionally make every effort to avoid installing the stethoscope over bones on the basis of the fact that the bones reflect the internal sounds to the interior of the body. Thus, the inventors have come to the conclusion that the site shown in Figures 4 and 5 is optimum for installing the stethoscope-type microphone.

### (Waveforms and Spectra of a Normal Sound, a Whisper, and a Non-audible Murmur)

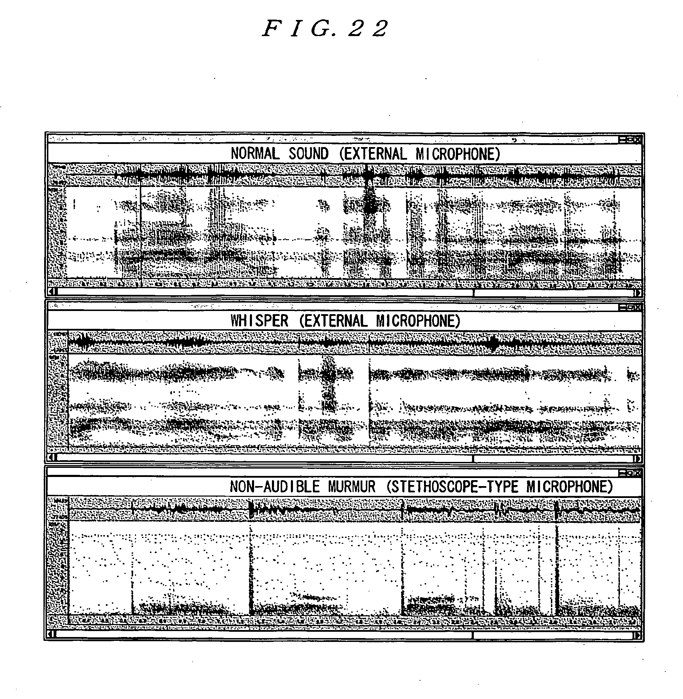

Figure 22 shows sound signals for and the spectra of a normal sound, a whisper (both were sampled using an external microphone), and a general non-audible murmur (sampled using an original microphone contacted tightly with the body surface) sampled at an installed position different from that according to the present invention. In this case, the non-audible murmur us sampled by installing the microphone at the parotid site. When the volume is increased until formants are drawn in vowels, the power of sound signals for consonants often overflows.

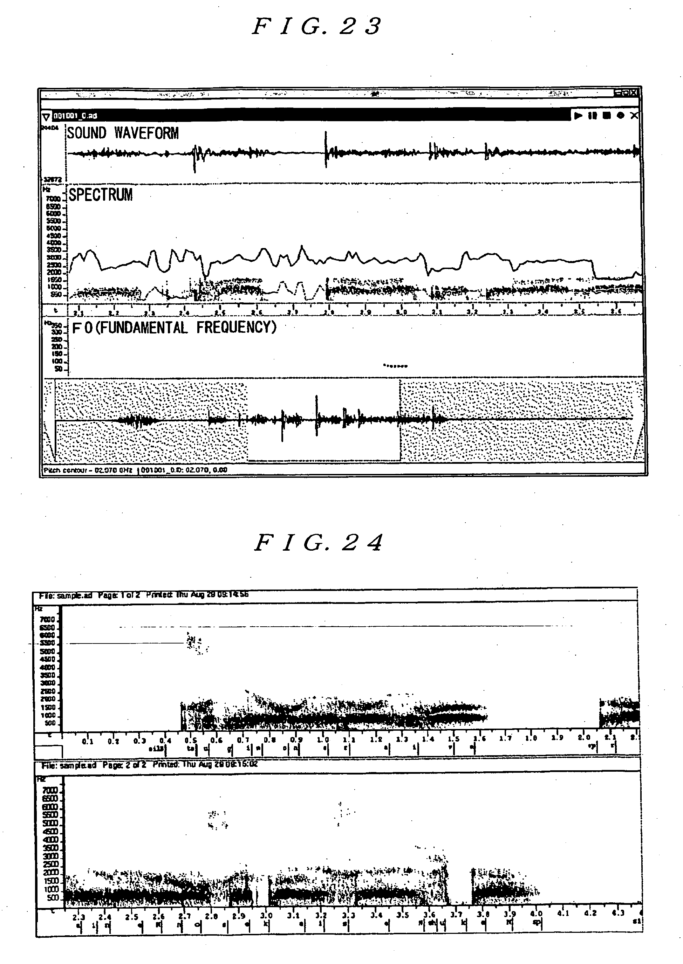

Figures 23 and 24 show a sound signal for and the spectrum of a non-audible murmur sampled through the microphone installed at the optimum position shown in Figure 4. Figure 23 shows that the fundamental frequency F0, resulting from the regular vibration of the vocal cords, does not substantially appear in the non-audible murmur. The figure also shows that the formant structure of a low frequency area containing a phonemic characteristic is relatively appropriately maintained.

A man's non-audible murmur sampled as described above was used and illustrative sentences with a phonemic balance maintained were each read aloud four times. The sounds obtained were sampled in a digital form at 16 kHz and 16 bits. As the illustrative sentences, 503 ATR (Advanced Telecommunications Research) phonemic balance sentences available from the ATR Sound Translation Communication Research Center and additional 22 sentences were used.

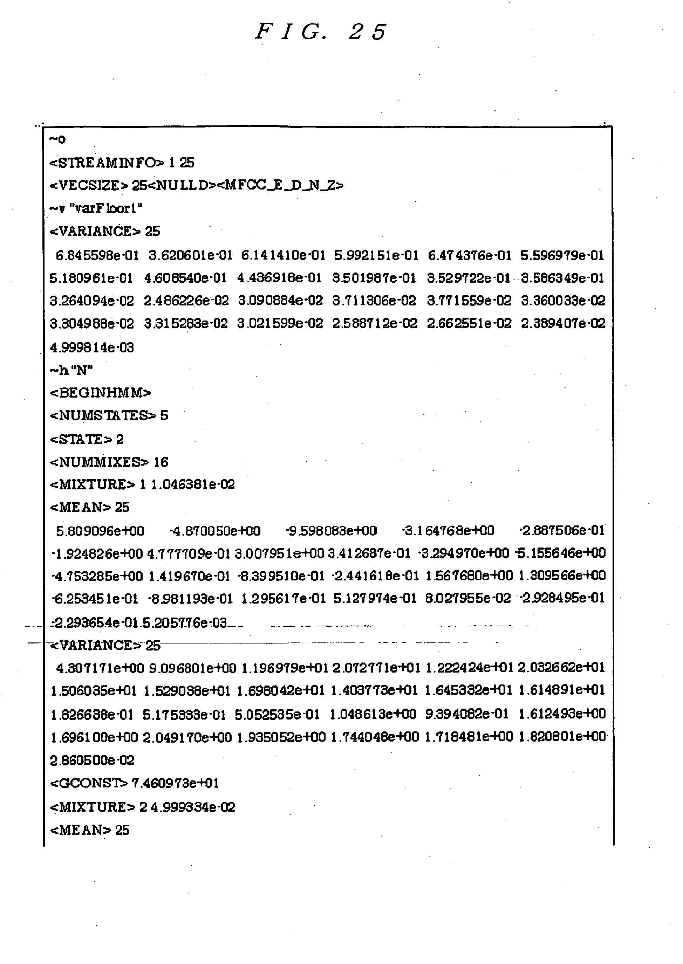

In the present example, raw file data on a total of 2, 100 samples were used, and HTK (HMM Toolkit) that is a hidden Markov model tool was used. Then, as in the case of normal speech recognition, 25 parameters including a 12-dimensional Mel-cepstrum and its 12 primary differentials as well as one power primary differential were extracted at a frame period of 10 ms to create an acoustic model for monophone speech recognition. Figure 25 shows an example of the monophone speech recognition acoustic model thus created.

Although this is a monophone model, the recognition rate is sharply raised by increasing the number of contaminations in a contaminated normal distribution to 16. When this replaced the acoustic model of the speech recognition engine Julius (http://julius.sourceforge.jp/), which is free basic software for Japanese dictations, the word recognition rate obtained using the recorded non-audible murmur was comparable to that obtained using a sex-independent normal sound monophone model.

### (Example of Results of Speech Recognition)

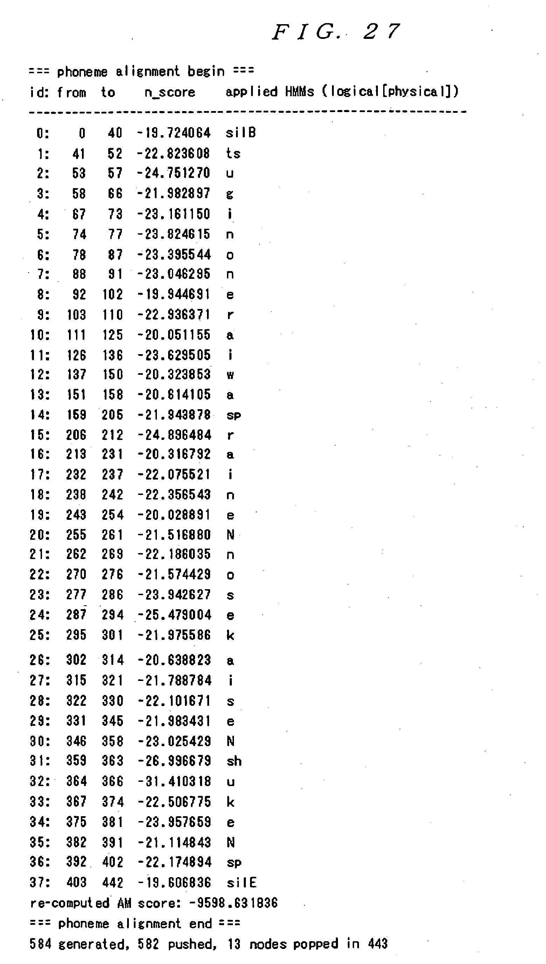

Figure 26 shows the results of recognition of a recorded sound. Further, Figure 27 shows an example of automatic phoneme alignment. A phoneme label in the lower part of the spectrum in Figure 24 is shown on the basis of the result of the automatic alignment segmentation.

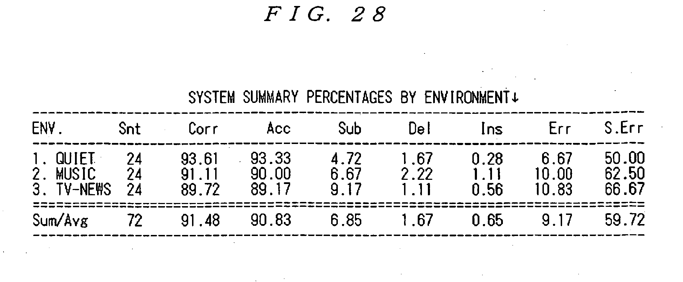

Similarly, the inventors had a man read about 4,600 sentences including phoneme balanced sentences and sentences from newspaper articles in the form of non-audible murmurs, and sampled sounds obtained. Then, juncture learning was carried out using an unspecified male speaker sound monophone model (5-state and 16-contamination normal distribution) as an initial model. Figure 28 shows word recognition performance exhibited when the unspecified male speaker normal sound monophone model was incorporated into Julius, which was then used without changing the conditions except for the acoustic model. In the figure, "CLEAN" in the first line shows the result of recognition in a silent room. "MUSIC" in the second line shows the result of recognition in the case where classical music at a normal volume is played in the room as a BGM. "TV-NEW" in the third line shows the result of recognition in the case where television news is provided in the room at a normal listening volume.

In the silent room, the word recognition performance was 94%, which is comparable to that for a normal sound. Further, even with the music or a TV sound, the word recognition performance was good, 91 or 90%, respectively. This indicates that the non-audible murmur based on flesh conduction resists background noise better than the normal sound based on air conduction.

The normal sound can be picked up at the above installed sites by sealing the hole in the sucker of the stethoscope-type microphone 1-1 or finely adjusting the volume or the like. In this case, if a third person gives recitation or the like right next to the speaker, only the speaker's voice is recorded because the speaker's voice undergoes flesh conduction instead of air conduction.

Advantageously, the non-audible murmur or normal sound picked up through the stethoscope-type microphone requires only the learning of an acoustic model of a person using the microphone. Thus, the stethoscope-type microphone can be used as a noiseless microphone for normal speech recognition.

Description has been given of the method of installing the stethoscope-type microphone immediately below the mastoid to sample a non-audible murmur and using the microphone amplifier to amplify the sound, and then utilizing the sound amplified for a speech over the cellular phone, as well as a method of utilizing the sound amplified for speech recognition carried out by the speech recognition apparatus.

### (Modulation of a Sound)

Now, the modulation of a sound will be described. The modulation of a sound refers to a change in the auditory tonality of a sound, that is, a change in sound quality. In the recent phonetic research, the term morphing is often used to refer to the modulation. The term morphing is used as a general term for, for example, techniques for increasing and reducing the fundamental frequency of a sound, increasing and reducing the formant frequency, continuously changing a male voice to a female voice or a female voice to a male voice, and continuously changing one man's voice to another man's voice.

Various methods have been proposed as morphing techniques. STRAIGHT, proposed by Kawahara (Kawahara et al., Shingaku Giho, EA96-28, 1996), is known as a representative method. This method is **characterized in that** parameters such as the fundamental frequency (F0), a spectrum envelope, and a speech speed can be independently varied by accurately separating sound source information from vocal tract information.

According to the present invention, as shown in Figures 22 to 24, the spectrum of the non-audible murmur can be calculated to determine a spectrum envelope from the spectrum obtained.

As shown in Figure 22, both an audible normal sound, using the regular vibration of the vocal cords, and a non-audible murmur are recorded for the same sentence. Then, a function for a conversion into the spectrum of the normal sound is predetermined from the spectrum of the non-audible murmur. This can be carried out by those skilled in the art.

Moreover, the appropriate use of the fundamental frequency enables the non-audible murmur to be modulated into a more audible sound using a method such as STRAIGHT, previously described.

Moreover, according to the present invention, the non-audible murmur can be subjected to speech recognition as shown in Figure 28. Consequently, on the basis of the results of the speech recognition of the non-audible murmur, phonetic units such as syllables, semi-syllables, phonemes, two-juncture phonemes, and three-juncture phonemes can be recognized. Further, on the basis of the results of the speech recognition, the non-audible murmur can be modulated into a sound that can be more easily heard, using a speech synthesis technique described in a well-known text.

### (Applied Examples)

Description has been given of the case where only the microphone is installed immediately below the mastoid. In this case, the microphone is exposed and appears odd. Thus, the microphone may be integrated with a head-installed object such as glasses, a headphone, a supra-aural earphone, a cap, or a helmet which is installed on the user's head.

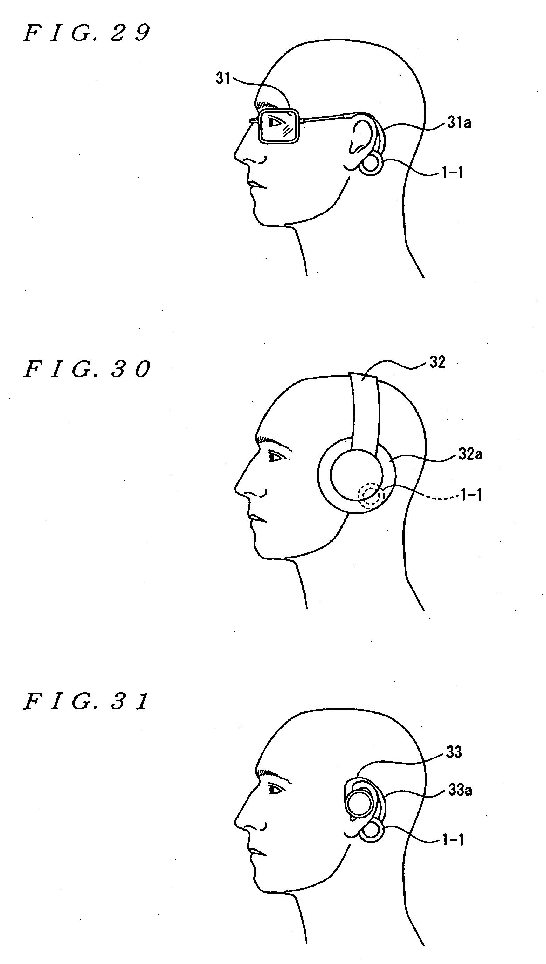

For example, as shown in Figure 29, the microphone 1-1 may be provided at an end of a bow portion 31a of glasses 31 which is placed around the ear.

Alternatively, as shown in Figure 30, the microphone 1-1 is provided in an earmuff portion 32a of a headphone 32. Likewise, as shown in Figure 31, the microphone 1-1 may be provided at an end of a bowportion 33a of a supra-aural earphone 33 which is placed around the ear.

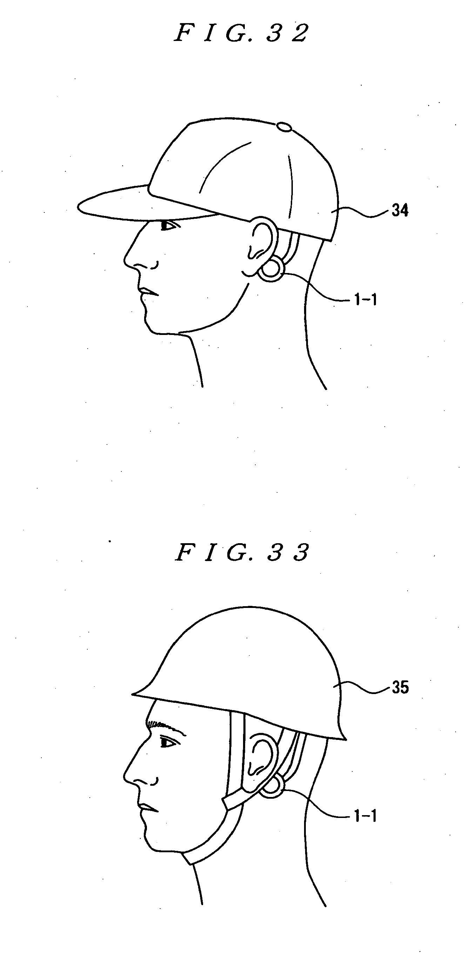

Moreover, as shown in Figure 32, a cap 34 and the microphone 1-1 may be integrated together. Likewise, as shown in Figure 33, a helmet 35 and the microphone 1-1 may be integrated together. By integrating these with the microphone, it is possible to use the microphone in a work or construction site so that the microphone does not appear odd. Even with loud noises around the speaker, good speeches can be made.

As described above, the microphone can be installed without appearing odd by being integrated with any of various head-installed objects. Further, the microphone can be installed immediately below the mastoid by improving the placement of the microphone.

### (Variations)

Description will be given below of variations of the communication interface system according to the present invention.

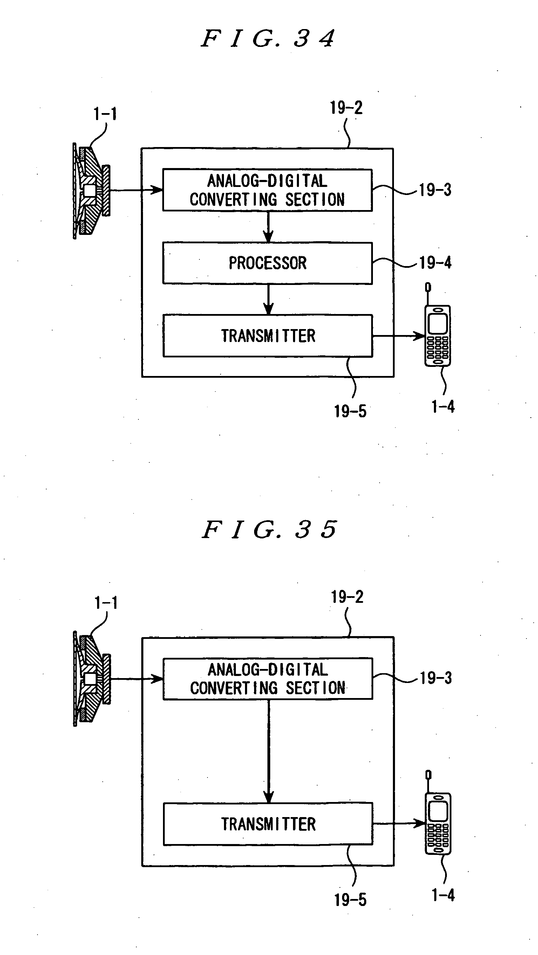

Figure 34 is a block diagram showing a variation in which a signal processing apparatus is provided between the microphone and a portable terminal. In the figure, a signal processing apparatus 19-2 is composed of an analog-digital converter 19-3, a processor 19-4, and a transmitter 19-5 which are integrated together.

With this configuration, the analog-digital converter 19-3 obtains and quanti zes the vibration sound of a non-audible murmur sampled through the microphone 1-1 to convert the sound into a digital signal. The digital signal, the result of the quantization, is sent to the processor 19-4. The processor 19-4 executes processing such as amplification or conversion on the digital signal sent by the analog-digital converter 19-3. The result of the processing is sent to the transmitter 19-5. The transmitter 19-5 transmits the digital signal processed by the processor 19-4 to a cellular phone 19-6 by wire or wireless. Those skilled in the art can easily produce the signal processing apparatus 19-2. Thus, for example, an apparatus in amobile telephone network canprocess the processed vibration sound as it is or process the signal converted into parameters. This serves to simplify the configuration of the signal processing apparatus.

Figure 35 is also a block diagram showing a variation in which a signal processing apparatus is provided between the microphone and a portable terminal. In the figure, the signal processing apparatus 19-2 is composed of the analog-digital converter 19-3 and the transmitter 19-5, which are integrated together.

With this configuration, the analog-digital converter 19-3 obtains and quantizes the vibration sound of a non-audible murmur sampled through the microphone 1-1 to convert the sound into a digital signal. The digital signal, the result of the quantization, is sent to the transmitter 19-5. The transmitter 19-5 transmits the digital signal obtained by the conversion by the analog-digital converter 19-3 to the cellular phone 1-4 by wire or wireless. This configuration enables the cellular phone or a base station for the cellular phone to process the vibration sound sampled. Thus, the configuration of the signal processing apparatus 19-2 can be simplified. Those skilled in the art can easily produce the signal processing apparatus 19-2. Thus, for example, an apparatus in a mobile telephone network can process the result of the quantization. This serves to simplify the configuration of the signal processing apparatus.

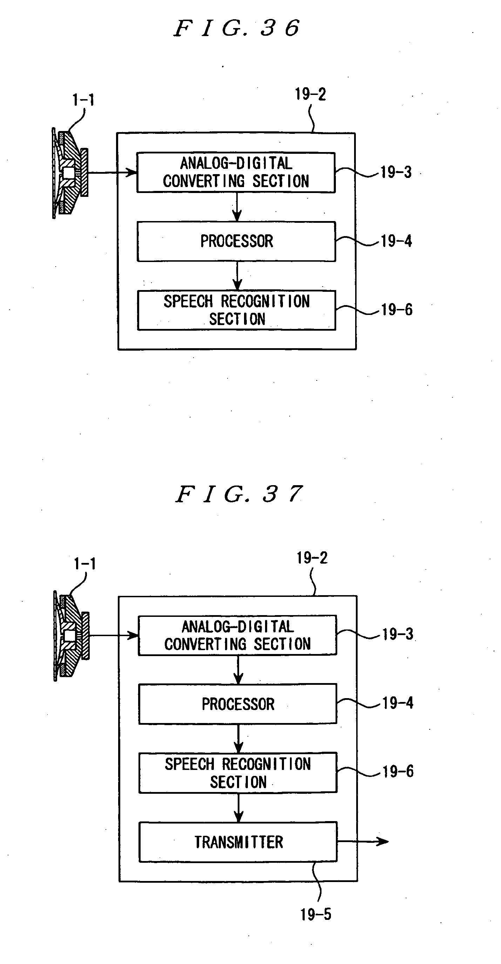

It is possible to use the signal processing apparatus 19-2 composed of the analog-digital converter 19-3, the processor 19-4, and a speech recognition section 19-6, which are integrated together, as shown in Figure 36.

With this configuration, the analog-digital converter 19-3 obtains and quantizes the vibration sound of a non-audible murmur sampled through the microphone 1-1 to convert the sound into a digital signal. The digital signal, the result of the quantization, is sent to the processor 19-4. The processor 19-4 executes processing such as amplification or conversion on the digital signal sent by the analog-digital converter 19-3. The speech recognition section 19-6 executes a speech recognition process on the result of the processing. Those skilled in the art can easily produce the signal processing apparatus 19-2. With the signal processing apparatus configured as described above, in connection with the non-audible murmur, a speech recognition process can be executed on the signal for the processed vibration sound as it is or on the signal converted into parameters.

Alternatively, as shown in Figure 37, the transmitter 19-5 may be added to the configuration shown in Figure 36. With this configuration, the transmitter 19-5 transmits the results of the speech recognition by the speech recognition section 19-6 to external equipment. Those skilled in the art can easily produce the signal processing apparatus 19-2. By transmitting the results of the speech recognition to, for example, a mobile telephone network, it is possible to utilize the results of the speech recognition to various processes.

The microphone according to the present invention may be built into a cellular phone or the like. In this case, by pressing the microphone portion against the surface of the skin on the sternocleidomastoid muscle immediately below the mastoid, it is possible to make a speech utilizing non-audible murmurs.

### Industrial Applicability

The present invention enables the utilization of voiceless speeches over the cellular phone and a voiceless speech recognition apparatus.

That is, speeches can be made over the cellular phone or information can be input to a computer or a personal potable information terminal, using only the speech motion of the articulatory organs, which is inherently acquired and cultivated through the phonetic language culture, and without the need to learn new techniques.

Moreover, the present invention avoids the mixture of surrounding background noises and prevents a silent environment from being disrupted. In particular, the publicity of the phonetic language can be controlled. Users need not worry about the leakage of information to surrounding people.

Further, for normal speech recognition, this sound sampling method enables a sharp reduction in the mixture of noises.

The present invention eliminates the need to install the microphone in front of the eyes or about the lips to prevent the microphone from bothering the user. The present invention also eliminates the need to hold the cellular phone against the ear with one hand. The microphone has only to be installed on the lower part of the skin behind the auricle. Advantageously, the microphone may be hidden under hair.

The present invention may create a new language communication culture that does not require any normal sound. The present invention significantly facilitates the spread of the whole speech recognition technology to actual life. Furthermore, the present invention is optimum for people from whom the vocal cords have been removed or who have difficulty in speeches using the regular vibration of the vocal cords.

## Claims

1. A microphone unit for sampling one of:
a non-audible murmur articulated by a variation in resonance filter characteristics associated with motion of the phonatory organ, which does not involve a regular vibration of the vocal cords, and
which is a vibration sound generated when an externally non-audible respiratory sound is transmitted through internal soft tissues, and
an audible sound including one of a whisper which is audible but is uttered without regularly vibrating the vocal cords, a sound uttered by regularly vibrating the vocal cords and including a low voice or a murmur, a teeth gnashing sound, and a tongue clucking sound,
the microphone unit comprising
a diaphragm (3-3) adapted to be installed on a surface of the skin on the sternocleidomastoid muscle immediately below the mastoid (4-12) of the skull, that is, on the lower part of the skin behind the auricle,
a synthetic resin sucker (3-2) that is stuck to the diaphragm (3-3) such that a closed space is formed by the diaphragm (3-3) and the synthetic resin sucker (3-2), and
a capacitor microphone (3-1) embedded in the synthetic resin sucker (3-2), and
an opening (3-4) within the synthetic resin sucker (3-2) leading from the closed space to the capacitor microphone.

2. The microphone unit according to claim 1, which is integrated with an object for installation on the human head, such as glasses (31), a headphone (32), a supra-aural earphone (33), a cap (34), or a helmet (35).

3. A communication interface system comprising the microphone unit according to claim 1 or 2 and a signal processing apparatus (19-2) adapted to process a signal sampled through the capacitor microphone (3-1),
wherein a result of processing by the signal processing apparatus (19-2) is used for communications.

4. The communication interface system according to claim 3, wherein the signal processing apparatus (19-2) includes an analog digital converting section (19-3) adapted to quantize a signal sampled through the capacitor microphone (3-1), a processor section (19-4) adapted to process a result of the quantization by the analog digital converting section (19-3), and a transmission section (19-5) adapted to transmit a result of the processing by the processor section (19-4) to an external apparatus.

5. The communication interface system according to claim 3, wherein the signal processing apparatus (19-2) includes an analog digital converting section (19-3) adapted to quantize a signal sampled through the capacitor microphone and a transmission section (19-5) adapted to transmit a result of the quantization by the analog digital converting section (19-3) to an external apparatus, the external apparatus is adapted to process the result of the quantization.

6. The communication interface system according to claim 4, wherein the signal processing apparatus includes an analog digital converting section (19-3) adapted to quantize a signal sampled through the capacitor microphone, a processor section (19-4) adapted to process a result of the quantization by the analog digital converting section (19-3), and a speech recognition section (19-6) adapted to execute a speech recognition process on a result of the processing by the processor section (19-4).

7. The communication interface system according to claim 6, further comprising a transmission section (19-5) adapted to transmit a result of the speech recognition by the speech recognition section (19-6) to an external apparatus.

8. The communication interface system according to claim 4, wherein an apparatus in a mobile telephone network is adapted to execute a speech recognition process on the result of the processing by the processor section (19-4), the result being transmitted by the transmitting section (19-5).

9. The communication interface system according to claim 4, wherein:
the signal processing executed by the signal processing apparatus (19-2) is a modulating process in which the processor section (19-4) modulates the signal into an audible sound, and the modulating process applies a fundamental frequency of the vocal cords to non-audible murmur to convert the non-audible murmur into an audible sound that is the regular vibration of the vocal cords.

10. The communication interface system according to claim 4, wherein:
the signal processing executed by the signal processing apparatus (19-2) is a modulating process in which the processor section (19-4) modulates the signal into an audible sound, and
the modulating process converts a spectrum of the non-audible murmur into a spectrum of an audible sound uttered using the regular vibration of the vocal cords.

11. The communication interface system according to claim 10, wherein the modulating process uses the spectrum of the non-audible murmur and a speech recognition apparatus to recognize phonetic units such as syllables, semi-syllables, phonemes, two-juncture phonemes, and three-juncture phonemes and uses a speech synthesis technique to convert the phonetic units recognized into an audible sound uttered using the regular vibration of the vocal cords.

12. The communication interface system according to any of claims 4 to 11, wherein an input gain is controlled in accordance with a magnitude of a dynamic range of a sound sampled through the capacitor microphone (3-1).

13. The communication interface system according to claim 6 or 7, wherein the speech recognition section (19-6) is adapted to appropriately execute speech recognition utilizing an acoustic model of at least one of the non-audible murmur and the audible sound sampled through the capacitor microphone (3-1).

14. A signal processing apparatus that processes a signal sampled through a microphone unit according to claim 1 or 2.

## Patentansprüche

1. Mikrofoneinheit zum Abtasten
eines nicht hörbaren Gemurmels, das artikuliert wird durch eine Änderung in Resonanzfiltercharakteristiken, die zu einer Bewegung des phonatorischen Organs gehört, die keine normale Vibration der Stimmbänder ist, und das ein Vibrationsgeräusch ist, das erzeugt wird, wenn ein extern nicht hörbares respiratorisches Geräusch durch internes Weichgewebe übertragen wird, oder
eines hörbaren Schalls enthaltend ein Flüstern, das hörbar ist, aber ohne normales Vibrieren der Stimmbänder geäußert wird, einen Schall, der durch normales Vibrieren der Stimmbänder geäußert wird und eine tiefe Stimme oder ein Gemurmel enthält, ein Zähneknirschgeräusch oder ein Zungenschnalzgeräusch, wobei die Mikrofoneinheit aufweist:
eine Membran (3-3), die angepasst ist zur Installation auf einer Oberfläche der Haut auf dem Sternocleidomastoideusmuskel unmittelbar unterhalb dem Mastoid (4-12) des Schädels, also auf dem unteren Teil der Haut hinter dem Aurikel,
einen Kunstharzsauger (3-2), der derart an der Membran (3-3) angebracht ist, dass ein geschlossener Raum durch die Membran (3-3) und den Kunstharzsauger (3-2) gebildet wird, und
ein Kondensatormikrofon (3-1), das in den Kunstharzsauger (3-2) eingebettet ist, und
eine Öffnung (3-4) innerhalb des Kunstharzsaugers (3-2), die von dem geschlossenen Raum zu dem Kondensatormikrofon führt.

2. Mikrofoneinheit nach Anspruch 1, die mit einem Objekt zur Installation auf dem menschlichen Kopf, beispielsweise einer Brille (32), einem Kopfhörer (32), einem Supraohrhörer (33), einer Kappe (34) oder einem Helm (35) integriert ist.

3. Kommunikationsschnittstellensystem mit einer Mikrofoneinheit gemäß Anspruch 1 oder 2 und einer Signalverarbeitungsvorrichtung (19-2), die angepasst ist zum Verarbeiten eines Signals, das durch das Kondensatormikrofon (3-1) abgetastet wird, wobei
ein Ergebnis der Verarbeitung durch die Signalverarbeitungsvorrichtung (19-2) zur Kommunikation verwendet wird.

4. Kommunikationsschnittstellensystem nach Anspruch 3, bei dem die Signalverarbeitungsvorrichtung (19-2) einen Analog-Digital-Wandlerabschnitt (19-3) enthält, der angepasst ist zum Quantisieren eines durch das Kondensatormikrofon (3-1) abgetasteten Signals, einen Prozessorabschnitt (19-4), der angepasst ist zum Verarbeiten eines Ergebnisses der Quantisierung durch den Analog-Digital-Wandlerabschnitt (19-3), und einen Übertragungsabschnitt (19-5), der angepasst ist zum Übertragen eines Ergebnisses der Verarbeitung durch den Prozessorabschnitt (19-4) an ein externes Gerät.

5. Kommunikationsschnittstellensystem nach Anspruch 3, bei dem die Signalverarbeitungsvorrichtung (19-2) einen Analog-Digital-Wandlerabschnitt (19-3) enthält, der angepasst ist zum Quantisieren des Signals, das durch das Kondensatormikrofon abgetastet ist, und einen Übertragungsabschnitt (19-5), der angepasst ist zum Übertragen eines Ergebnisses der Quantisierung durch den Analog-Digital-Wandlerabschnitt (19-3) an ein externes Gerät, wobei das externe Gerät angepasst ist zum Verarbeiten des Ergebnisses der Quantisierung.

6. Kommunikationsschnittstellensystem nach Anspruch 4, bei dem die Signalverarbeitungsvorrichtung einen Analog-Digital-Wandlerabschnitt (19-3) enthält, der angepasst ist zum Quantisieren eines Signals, das durch das Kondensatormikrofon abgetastet ist, einen Prozessorabschnitt (19-4), der angepasst ist zum Verarbeiten eines Ergebnisses der Quantisierung durch den Analog-Digital-Wandlerabschnitt (19-3), und einen Spracherkennungsabschnitt (19-6), der angepasst ist zum Durchführen eines Spracherkennungsprozesses für ein Ergebnis der Verarbeitung durch den Verarbeitungsabschnitt (19-4).

7. Kommunikationsschnittstellensystem nach Anspruch 6, ferner enthaltend einen Übertragungsabschnitt (19-5), der angepasst ist zum Übertragen eines Ergebnisses der Spracherkennung durch den Spracherkennungsabschnitt (19-6) an ein externes Gerät.

8. Kommunikationsschnittstellensystem nach Anspruch 4, bei dem ein Gerät in einem mobilen Telefonnetzwerk angepasst ist zum Durchführen eines Spracherkennungsprozesses für das Ergebnis der Verarbeitung durch den Prozessorabschnitt (19-4), wobei das Ergebnis von dem Übertragungsabschnitt (19-5) übertragen wird.

9. Kommunikationsschnittstellensystem nach Anspruch 4, bei dem:
die Signalverarbeitung, die durch die Signalverarbeitungsvorrichtung (19-2) durchgeführt wird, ein Modulationsprozess ist, bei dem der Prozessorabschnitt (19-4) das Signal in hörbaren Schall moduliert, und der Modulationsprozess eine Grundfrequenz der Stimmbänder auf das nicht hörbare Gemurmel anwendet, um das nicht hörbare Gemurmel in einen hörbaren Schall umzuwandeln, der die normale Vibration der Stimmbänder ist.

10. Kommunikationsschnittstellensystem nach Anspruch 4, bei dem:
die Signalverarbeitung, die durch die Signalverarbeitungsvorrichtung (19-2) durchgeführt wird, ein Modulationsprozess ist, bei dem der Prozessorabschnitt (19-4) das Signal in einen hörbaren Schall moduliert, und
der Modulationsprozess ein Spektrum des nicht hörbaren Gemurmels in ein Spektrum eines hörbaren Schalls umwandelt, der durch Verwenden der normalen Vibration der Stimmbänder geäußert wird.

11. Kommunikationsschnittstellensystem nach Anspruch 10, bei dem der Modulationsprozess das Spektrum des nicht hörbaren Gemurmels und eine Spracherkennungsvorrichtung verwendet zur Erkennung phonetischer Einheiten wie Silben, Halbsilben, Laute, zwei verbundene Laute und drei verbundene Laute, und eine Sprachsynthesetechnik verwendet, um die erkannten phonetischen Einheiten in hörbaren Schall umzuwandeln, der unter Verwendung der normalen Vibration der Stimmbänder geäußert wird.

12. Kommunikationsschnittstellensystem nach einem der Ansprüche 4 bis 11, bei dem ein Eingangsgewinn gemäß einer Größe eines dynamischen Bereichs eines durch das Kondensatormikrofon (3-1) abgetasteten Schalls gesteuert wird.

13. Kommunikationsschnittstellensystem nach Anspruch 6 oder 7, bei dem der Spracherkennungsabschnitt (19-6) angepasst ist zur entsprechenden Durchführung einer Spracherkennung unter Verwendung eines akustischen Modells von mindestens einem nicht hörbaren Gemurmel oder einem hörbaren Schall, die durch das Kondensatormikrofon (3-1) abgetastet werden.

14. Signalverarbeitungsvorrichtung, die ein Signal verarbeitet, das durch eine Mikrofoneinheit gemäß Anspruch 1 oder 2 abgetastet wird.

## Revendications

1. Unité de microphone pour échantillonner l'un des sons suivants :
un murmure non audible articulé par une variation des caractéristiques de filtres de résonance associée au mouvement de l'organe phonatoire, qui n'implique pas une vibration normale des cordes vocales et qui est un son vibratoire généré lorsqu'un son respiratoire non audible à l'extérieur est transmis par des tissus mous internes, et
un son audible comprenant l'un des suivants : un souffle qui est audible, mais est exprimé sans faire vibrer de manière normale les cordes vocales, un son exprimé en faisant normalement vibrer les cordes vocales et comprenant une voix basse ou un murmure, un son de grincement de dents et un son de claquement de langue, l'unité de microphone comprenant :
un diaphragme (3-3) adapté pour être installé sur une surface de la peau du muscle sterno-cleidomastoïdien immédiatement en dessous de l'apophyse mastoïde (4-12) du crâne, à savoir sur la partie inférieure de la peau derrière le pavillon de l'oreille,
une ventouse de résine synthétique (3-2) qui est collée au diaphragme (3-3) de sorte qu'un espace fermé soit formé par le diaphragme (3-3) et la ventouse de résine synthétique (3-2) et
un microphone à condensateur (3-1) intégré à la ventouse de résine synthétique (3-2), et une ouverture (3-4) à l'intérieur de la ventouse de résine synthétique (3-2) allant de l'espace fermé au microphone à condensateur.

2. Unité de microphone selon la revendication 1, qui est intégrée à un objet à installer sur la tête d'un être humain, comme des lunettes (31), un écouteur (32), un écouteur supra-aural (33), une coiffe (34) ou un casque (35).

3. Système d'interface de communication comprenant l'unité de microphone selon la revendication 1 ou 2 et un appareil de traitement de signal (19-2) adapté pour traiter un signal échantillonné par le microphone à condensateur (3-1),
dans lequel un résultat du traitement par l'appareil de traitement de signal (19-2) est utilisé pour les communications.

4. Système d'interface de communication selon la revendication 3, dans lequel l'appareil de traitement de signal (19-2) comprend une section de conversion analogique/numérique (19-3) adaptée pour quantifier un signal échantillonné par le microphone à condensateur (3-1), une section de traitement (19-4) adaptée pour traiter un résultat de la quantification par la section de conversion analogique/numérique (19-3) et une section de transmission (19-5) adaptée pour transmettre un résultat du traitement par la section de traitement (19-4) à un appareil externe.

5. Système d'interface de communication selon la revendication 3, dans lequel l'appareil de traitement de signal (19-2) comprend une section de conversion analogique/numérique (19-3) adapté pour quantifier un signal échantillonné par le microphone à condensateur et une section de transmission (19-5) adaptée pour transmettre un résultat de la quantification par la section de conversion analogique/numérique (19-3) à un appareil externe, l'appareil externe est adapté pour traiter le résultat de la quantification.

6. Système d'interface de communication selon la revendication 4, dans lequel l'appareil de traitement de signal comprend une section de conversion analogique/numérique (19-3) adaptée pour quantifier un signal échantillonné par le microphone à condensateur, une section de traitement (19-4) adaptée pour traiter un résultat de la quantification par la section de conversion analogique/numérique (19-3), et une section de reconnaissance vocale (19-6) adaptée pour effectuer un procédé de reconnaissance vocale sur un résultat du traitement par la section de traitement (19-4).

7. Système d'interface de communication selon la revendication 6, comprenant en outre une section de transmission (19-5) adaptée pour transmettre un résultat de la reconnaissance vocale par la section de reconnaissance vocale (19-6) à un appareil externe.

8. Système d'interface de communication selon la revendication 4, dans lequel un appareil d'un réseau de téléphone mobile est adapté pour effectuer un procédé de reconnaissance vocale sur le résultat du traitement par la section de traitement (19-4), le résultat étant transmis par la section de transmission (19-5).

9. Système d'interface de communication selon la revendication 4, dans lequel :
le traitement du signal effectué par l'appareil de
traitement de signal (19-2) est un procédé de modulation dans lequel la section de traitement (19-4) module le signal en un son audible et le procédé de modulation applique une fréquence fondamentale des cordes vocales au murmure non audible pour convertir le murmure non audible en un son audible qui est la vibration régulière des cordes vocales.

10. Système d'interface de communication selon la revendication 4, dans lequel :
le traitement du signal effectué par l'appareil de traitement de signal (19-2) est un procédé de modulation dans lequel la section de traitement (19-4) module le signal en un son audible et
le procédé de modulation convertit un spectre du murmure non audible en un spectre d'un son audible exprimé en utilisant la vibration régulière des cordes vocales.

11. Système d'interface de communication selon la revendication 10, dans lequel le procédé de modulation utilise le spectre du murmure non audible et un appareil de reconnaissance vocale pour reconnaître des unités phonétiques, telles que des syllabes, des demi-syllabes, des phonèmes, des phonèmes à deux jonctions et des phonèmes à trois jonctions et utilise une technique de synthèse vocale pour convertir les unités phonétiques reconnues en un son audible exprimé en utilisant la vibration régulière des cordes vocales.

12. Système d'interface de communication selon l'une quelconque des revendications 4 à 11, dans lequel un gain d'entrée est commandé conformément à la grandeur d'une plage dynamique d'un son échantillonné par le microphone à condensateur (3-1).

13. Système d'interface de communication selon la revendication 6 ou 7, dans lequel la section de reconnaissance vocale (19-6) est adaptée pour effectuer de manière appropriée une reconnaissance vocale en utilisant un modèle acoustique d'au moins un son parmi le murmure non audible et le son audible échantillonnés par le microphone à condensateur (3-1).

14. Appareil de traitement de signal qui traite un signal échantillonné par une unité de microphone selon la revendication 1 ou 2.
